# EUROPEAN PATENT SPECIFICATION

(11) **EP 3 634 105 B1**
(45) Date of publication and mention of the grant of the patent: **27.04.2022**
(21) Application number: 18802742.9
(22) Date of filing: 18.05.2018
(51) Int. Cl.: A01C 1/06

(54) **SYSTEM AND METHOD FOR TREATING SEEDS**
VORRICHTUNG UND VERFAHREN ZUR BEHANDLUNG VON SAATGUT
SYSTÈME ET PROCÉDÉ DE TRAITEMENT DE SEMENCES

(30) Priority: 19.05.2017 US 201762508665 P
(43) Date of publication of application: 15.04.2020
(73) Proprietor: Monsanto Technology LLC, Saint Louis, MO 63167 (US)
(72) Inventor: BREWER, Damien, Saint Louis, Missouri 63167 (US); MAKADIA, Vallabh, Saint Louis, Missouri 63167 (US); SEYER, Daniel J., Saint Louis, Missouri 63167 (US)
(74) Representative: BIP Patents
(86) International application number: PCT/US2018/033383
(87) International publication number: WO 2018/213700

(56) References cited:
- WO-A1-97/36471
- DE-U1- 9 110 546
- GB-A- 881 552
- GB-A- 1 118 252
- US-A- 3 357 060
- US-A- 5 389 399
- US-A- 5 891 246
- US-A1- 2006 236 925
- US-A1- 2011 296 930
- US-A1- 2013 330 155
- US-A1- 2014 373 441

## Description

### FIELD OF THE DISCLOSURE

The present disclosure relates to a system and method for treating seeds and, more specifically, to a device, system, and method for continuously treating seeds in a plurality of compartments that rotate about an axis.

### BACKGROUND

Agricultural seeds are often treated before planting. In seed treatment processes, one or more seed treatment components, such as biological or chemical agents, are applied using a seed treater. Typically, seeds are treated in a batch process or a continuous process. In a batch treater, a predetermined quantity of seeds and one or more seed treatment components are delivered into a mixing chamber and mixed together until the seed treatment component(s) coat the seeds. During downtime between each batch, the coated seeds are removed from the mixing chamber and the chamber is conditioned for receiving the next batch of coated seeds. In one type of continuous treater, seed and a seed treatment component are delivered at predetermined rates into a horizontally rotating drum which agitates the seeds and the seed treatment component and centripetally expels the treated seeds from the conveyor at about the same rate that the seeds are delivered to the conveyor. In another type of continuous treater, untreated seeds are propelled through a fluid bed conveyor and propagated to an ejection site. After seeds are treated in a continuous treater, they are typically dried in a separate drying device. Relevant prior art are GB 1 118 252 A and WO 97/36471 A1.

### SUMMARY OF THE DISCLOSURE

The invention is defined by the appended claims.

### BRIEF DESCRIPTION THE DRAWINGS

FIG. 1 is a schematic illustration of a seed treatment system;
FIG. 2 is an exploded perspective of a revolving seed treater of the seed treatment system;
FIG. 3 is a schematic top plan view of the seed treater with a cap thereof removed to reveal a processing chamber thereof;
FIG. 3A is a schematic top plan view similar to FIG. 3 of the seed treater with a different configuration of fluidizing jet openings;
FIG. 4 is a schematic fragmentary cross section of a portion of the processing chamber of FIG. 3, schematically illustrating a jet of fluidizing air and a spray path of seed treatment component into the chamber;
FIG. 4A is a schematic fragmentary cross section similar to FIG. 4 of a processing chamber of the seed treater of FIG. 3A;
FIG. 5 is a schematic fragmentary cross section similar to FIG. 4, schematically illustrating the circulation path along which the fluidizing air directs seeds in the chamber to travel;
FIG. 5A is a schematic fragmentary cross section similar to FIG. 4A, schematically illustrating the circulation path along which fluidizing air directs seeds in the chamber to travel; and
FIG. 6 is a schematic top plan view of another configuration of the revolving seed treater.

Corresponding reference characters indicate corresponding parts throughout the drawings.

### DETAILED DESCRIPTION

In general, the systems, devices and processes described herein are suitable for applying a seed treatment to exterior surfaces of seeds.

### Seeds and Plant Species

The seed treatment systems and methods described herein can be used in connection with any species of plant and/or the seeds thereof. The methods are typically used in connection with seeds that are agronomically important. The seed may be a transgenic seed from which a transgenic plant can grow and incorporates a transgenic event that confers, for example, tolerance to a particular herbicide or combination of herbicides, increased disease resistance, enhanced tolerance to insects, drought, stress and/or enhanced yield. The seed may comprise a breeding trait, including for example, in one embodiment a disease tolerant breeding trait. In some instances, the seed includes at least one transgenic and breeding trait.

The process can be used for the treatment of any suitable seed type, including, but not limited to, row crops and vegetables. In some embodiments, one or more plants are selected from Amaranthaceae (e.g., chard, spinach, sugar beet, quinoa), Asteraceae (e.g., artichoke, asters, chamomile, chicory, chrysanthemums, dahlias, daisies, echinacea, goldenrod, guayule, lettuce, marigolds, safflower, sunflowers, zinnias), Brassicaceae (e.g., arugula, broccoli, bok choy, Brussels sprouts, cabbage, cauliflower, canola, collard greens, daikon, garden cress, horseradish, kale, mustard, radish, rapeseed, rutabaga, turnip, wasabi, watercress, *Arabidopsis thaliana*)*,* Cucurbitaceae (e.g., cantaloupe, cucumber, honeydew, melon, pumpkin, squash (e.g., acorn squash, butternut squash, summer squash), watermelon, zucchini), Fabaceae (e.g., alfalfa, beans, carob, clover, guar, lentils, mesquite, peas, peanuts, soybeans, tamarind, tragacanth, vetch), Malvaceae (e.g., cacao, cotton, durian, hibiscus, kenaf, kola, okra), Poaceae (e.g., bamboo, barley, corn, fonio, lawn grass (e.g., Bahia grass, Bermudagrass, bluegrass, Buffalograss, Centipede grass, Fescue, or Zoysia), millet, oats, ornamental grasses, rice, rye, sorghum, sugar cane, triticale, wheat), Polygonaceae (e.g., buckwheat), Rosaceae (e.g., almonds, apples, apricots, blackberry, blueberry, cherries, peaches, plums, quinces, raspberries, roses, strawberries), Solanaceae (e.g., bell peppers, chili peppers, eggplant, petunia, potato, tobacco, tomato) and Vitaceae (e.g., grape).

Non-limiting examples of seeds that may be treated with compositions of the present disclosure include those sold by Monsanto Company (St. Louis, MO) under the BOLLGARD II^{®}, DROUGHTGARD^{®}, GENUITY^{®}, RIB COMPLETE^{®}, ROUNDUP READY^{®}, ROUNDUP READY 2 YIELD^{®}, ROUNDUP READY 2 EXTEND^{™}, SMARTSTAX^{®}, VT DOUBLE PRO^{®}, VT TRIPLE PRO^{®}, YIELDGARD^{®}, YIELDGARD VT ROOTWORM/RR2^{®}, YIELDGARD VT TRIPLE^{®} and/or XTENDFLEX^{™} tradenames.

In some embodiments, the seed treatment component comprises a seed treatment active, such as a biological agent and/or agrochemical and/or other agent. In some embodiments, the seed treatment component comprises a seed-finishing agent suitable for enhancing one or more physical properties of the exterior surfaces of the seeds. The seed treatment component may be applied in a dry state or a wet state (e.g., slurry). The seed treatment component may comprise other seed treatment components for seed treating.

### Seed Treatment Active

In the processes described herein, the seed treatment component may comprise a seed treatment active comprising one or more biological agents and/or agrochemicals and/or other agents. Seed treatment active is defined herein to include both seed treatment material and seed applied material. After being contacted by the seed treatment active (seed applied material or seed treated material), for purposes herein, the seeds are referred to as "treated seeds."

In some embodiments, the seed treatment active comprises one or more pesticidal agents. Pesticidal agents include chemical pesticides and biopesticides or biocontrol agents. Various types of chemical pesticides and biopesticides include acaricides, insecticides, nematicides, fungicides, gastropodicides, herbicides, virucides, bactericides, plant growth regulators, and combinations thereof. Biopesticides or biocontrol agents may include bacteria, fungi, beneficial nematodes, and viruses that exhibit pesticidal activity.

### Acaricides, Insecticides and / or Nematicides

In some embodiments the seed treatment active comprises one or more chemical acaricides, insecticides, and/or nematicides. Non-limiting examples of chemical acaricides, insecticides, and/or nematicides may include one or more carbamates, diamides, macrocyclic lactones, neonicotinoids, organophosphates, phenylpyrazoles, pyrethrins, spinosyns, synthetic pyrethroids, tetronic acids and/or tetramic acids. Non-limiting examples of chemical acaricides, insecticides and nematicides that can be useful in compositions of the present disclosure include abamectin, acrinathrin, aldicarb, aldoxycarb, alpha-cypermethrin, betacyfluthrin, bifenthrin, cyhalothrin, cypermethrin, deltamethrin, esfenvalerate, etofenprox, fenpropathrin, fenvalerate, flucythrinate, fosthiazate, lambda-cyhalothrin, gamma-cyhalothrin, permethrin, tau-fluvalinate, transfluthrin, zeta-cypermethrin, cyfluthrin, bifenthrin, tefluthrin, eflusilanat, fubfenprox, pyrethrin, resmethrin, imidacloprid, acetamiprid, thiamethoxam, nitenpyram, thiacloprid, dinotefuran, clothianidin, chlorfluazuron, diflubenzuron, lufenuron, teflubenzuron, triflumuron, novaluron, flufenoxuron, hexaflumuron, bistrifluoron, noviflumuron, buprofezin, cyromazine, methoxyfenozide, tebufenozide, halofenozide, chromafenozide, endosulfan, fipronil, ethiprole, pyrafluprole, pyriprole, flubendiamide, chlorantraniliprole (e.g., *Rynaxypyr),* cyazypyr, emamectin, emamectin benzoate, abamectin, ivermectin, milbemectin, lepimectin, tebufenpyrad, fenpyroximate, pyridaben, fenazaquin, pyrimidifen, tolfenpyrad, dicofol, cyenopyrafen, cyflumetofen, acequinocyl, fluacrypyrin, bifenazate, diafenthiuron, etoxazole, clofentezine, spinosad, triarathen, tetradifon, propargite, hexythiazox, bromopropylate, chinomethionat, amitraz, pyrifluquinazon, pymetrozine, flonicamid, pyriproxyfen, diofenolan, chlorfenapyr, metaflumizone, indoxacarb, chlorpyrifos, spirodiclofen, spiromesifen, spirotetramat, pyridalyl, spinctoram, acephate, triazophos, profenofos, oxamyl, spinetoram, fenamiphos, fenamipclothiahos, 4-{[(6-chloropyrid-3-yl)methyl](2,2-difluoroethyl)amino}furan-2(5H)-one, 3,5-disubstituted-1,2,4-oxadiazole compounds, 3-phenyl-5-(thien-2-yl)-1,2,4-oxadiazole, cadusaphos, carbaryl, carbofuran, ethoprophos, thiodicarb, aldicarb, aldoxycarb, metamidophos, methiocarb, sulfoxaflor, cyantraniliprole and tioxazofen and combinations thereof. Additional non-limiting examples of chemical acaricides, insecticides, and/or nematicides may include one or more of abamectin, aldicarb, aldoxycarb, bifenthrin, carbofuran, chlorantraniliporle, chlothianidin, cyfluthrin, cyhalothrin, cypermethrin, cyantraniliprole, deltamethrin, dinotefuran, emamectin, ethiprole, fenamiphos, fipronil, flubendiamide, fosthiazate, imidacloprid, ivermectin, lambda-cyhalothrin, milbemectin, nitenpyram, oxamyl, permethrin, spinetoram, spinosad, spirodichlofen, spirotetramat, tefluthrin, thiacloprid, thiamethoxam, tioxazofen and/or thiodicarb, and combinations thereof.

Additional non-limiting examples of acaricides, insecticides and nematicides that may be included or used in compositions in some embodiments may be found in Steffey and Gray, Managing Insect Pests, ILLINOIS AGRONOMY HANDBOOK (2008); and Niblack, Nematodes, ILLINOIS AGRONOMY HANDBOOK (2008), the contents and disclosures of which are incorporated herein by reference. Non-limiting examples of commercial insecticides which may be suitable for the compositions disclosed herein include CRUISER (Syngenta, Wilmington, Delware), GAUCHO and PONCHO (Gustafson, Plano, Texas). Active ingredients in these and other commercial insecticides may include thiamethoxam, clothianidin, and imidacloprid. Commercial acaricides, insecticides, and/or nematicides may be used in accordance with a manufacturer's recommended amounts or concentrations.

In some embodiments the seed treatment active comprises one or more suitable biopesticidal microorganisms, the presence and/or output of which is toxic to an acarid, insect and/or nematode. For example, compositions may comprise one or more of *Bacillus firmus* I-1582, *Bacillus mycoides* AQ726, NRRL B-21664; *Beauveria bassiana* ATCC-74040, *Beauveria bassiana* ATCC-74250, *Burkholderia* sp. A396 sp. nov. rinojensis, NRRL B-50319, *Chromobacterium subtsugae* NRRL B-30655, *Chromobacterium vaccinii* NRRL B-50880, *Flavobacterium* H492, NRRL B-50584, *Metarhizium anisopliae* F52 (also known as *Metarhizium anisopliae* strain 52, *Metarhizium anisopliae* strain 7, *Metarhizium anisopliae* strain 43, and/or *Metarhizium anisopliae* BIO-1020, TAE-001; deposited as DSM 3884, DSM 3885, ATCC 90448, SD 170 and ARSEF 7711), *Paecilomyces fumosoroseus* FE991, and combinations thereof.

### Fungicides

In some embodiments the seed treatment active comprises one or more suitable chemical fungicides. Non-limiting examples of chemical fungicides may include one or more aromatic hydrocarbons, benzthiadiazole, carboxylic acid amides, morpholines, phenylamides, phosphonates, thiazolidines, thiophene, quinone outside inhibitors and strobilurins, such as azoxystrobin, coumethoxystrobin, coumoxystrobin, dimoxystrobin, enestroburin, fluoxastrobin, kresoxim-methyl, metominostrobin, orysastrobin, picoxystrobin, pyraclostrobin, pyrametostrobin, pyraoxystrobin, pyribencarb, trifloxystrobin, 2-[2-(2,5-dimethyl-phenoxymethyl)-phenyl]-3-methoxy-acrylic acid methyl ester, and 2-(2-(3-(2,6-dichlorophenyl)-1-methyl-allylideneaminooxymethyl)-phenyl)-2-methoxyimino-N-methyl-acetamide, carboxamides, such as carboxanilides (e.g., benalaxyl, benalaxyl-M, benodanil, bixafen, boscalid, carboxin, fenfuram, fenhexamid, flutolanil, fluxapyroxad, furametpyr, isopyrazam, isotianil, kiralaxyl, mepronil, metalaxyl, metalaxyl-M (mefenoxam), ofurace, oxadixyl, oxycarboxin, penflufen, penthiopyrad, sedaxane, tecloftalam, thifluzamide, tiadinil, 2-amino-4-methyl-thiazole-5-carboxanilide, N-(4'-trifluoromethylthiobiphenyl-2-yl)-3-difluoromethyl-1-methyl-1H-pyra- zole-4-carboxamide, N-(2-(1,3,3-trimethylbutyl)-phenyl)-1,3-dimethyl-5-fluoro-1H-pyrazole-4-carboxamide), carboxylic morpholides (e.g., dimethomorph, flumorph, pyrimorph), benzoic acid amides (e.g., flumetover, fluopicolide, fluopyram, zoxamide), carpropamid, dicyclomet, mandiproamid, oxytetracyclin, silthiofam, and N-(6-methoxy-pyridin-3-yl) cyclopropanecarboxylic acid amide, azoles, such as triazoles (e.g., azaconazole, bitertanol, bromuconazole, cyproconazole, difenoconazole, diniconazole, diniconazole-M, epoxiconazole, fenbuconazole, fluquinconazole, flusilazole, flutriafol, hexaconazole, imibenconazole, ipconazole, metconazole, myclobutanil, oxpoconazole, paclobutrazole, penconazole, propiconazole, prothioconazole, simeconazole, tebuconazole, tetraconazole, triadimefon, triadimenol, triticonazole, uniconazole) and imidazoles (e.g., cyazofamid, imazalil, pefurazoate, prochloraz, triflumizol); heterocyclic compounds, such as pyridines (e.g., fluazinam, pyrifenox (cf.D1b), 3-[5-(4-chloro-phenyl)-2,3-dimethyl-isoxazolidin-3-yl]-pyridine, 3-[5-(4-methylphenyl)-2,3-dimethyl-isoxazolidin-3-yl]-pyridine), pyrimidines (e.g., bupirimate, cyprodinil, diflumetorim, fenarimol, ferimzone, mepanipyrim, nitrapyrin, nuarimol, pyrimethanil), piperazines (e.g., triforine), pyrroles (e.g., fenpiclonil, fludioxonil), morpholines(e.g., aldimorph, dodemorph, dodemorph-acetate, fenpropimorph, tridemorph), piperidines (e.g., fenpropidin); dicarboximides (e.g., fluoroimid, iprodione, procymidone, vinclozolin), non-aromatic 5-membered heterocycles (e.g., famoxadone, fenamidone, flutianil, octhilinone, probenazole, 5-amino-2-isopropyl-3-oxo-4-ortho-tolyl-2,3-dihydro-pyrazole-1-carbothioic acid S-allyl ester), acibenzolar-S-methyl, ametoctradin, amisulbrom, anilazin, blasticidin-S, captafol, captan, chinomethionat, dazomet, debacarb, diclomezine, difenzoquat, difenzoquat-methylsulfate, fenoxanil, folpet, oxolinic acid, piperalin, proquinazid, pyroquilon, quinoxyfen, triazoxide, tricyclazole, 2-butoxy-6-iodo-3-propylchromen-4-one, 5-chloro-1-(4,6-dimethoxy-pyrimidin-2-yl)-2-methyl-1H-benzoimidazole and 5-chloro-7-(4-methylpiperidin-1-yl)-6-(2,4,6-trifluorophenyl)-[1,2,4]triazolo-[1,5-a]pyrimidine; benzimidazoles, such as carbendazim; and other active substances, such as guanidines (e.g., guanidine, dodine, dodine free base, guazatine, guazatine-acetate, iminoctadine), iminoctadine-triacetate and iminoctadine-tris(albesilate); antibiotics (e.g., kasugamycin, kasugamycin hydrochloride-hydrate, streptomycin, polyoxine and validamycin A), nitrophenyl derivates (e.g., binapacryl, dicloran, dinobuton, dinocap, nitrothal-isopropyl, tecnazen). organometal compounds (e.g., fentin salts, such as fentin-acetate, fentin chloride, fentin hydroxide); sulfur-containing heterocyclyl compounds (e.g., dithianon, isoprothiolane), organophosphorus compounds (e.g., edifenphos, fosetyl, fosetyl-aluminum, iprobenfos, phosphorus acid and its salts, pyrazophos, tolclofos-methyl), organochlorine compounds (e.g., chlorothalonil, dichlofluanid, dichlorophen, flusulfamide, hexachlorobenzene, pencycuron, pentachlorphenole and its salts, phthalide, quintozene, thiophanate-methyl, thiophanates, tolylfluanid, N-(4-chloro-2-nitro-phenyl)-N-ethyl-4-methyl-benzenesulfonamide) and inorganic active substances (e.g., Bordeaux mixture, copper acetate, copper hydroxide, copper oxychloride, basic copper sulfate, sulfur) and combinations thereof. In an aspect, the seed treatment active comprises acibenzolar-S-methyl, azoxystrobin, benalaxyl, bixafen, boscalid, carbendazim, cyproconazole, dimethomorph, epoxiconazole, fludioxonil, fluopyram, fluoxastrobin, flutianil, flutolanil, fluxapyroxad, fosetyl-Al, ipconazole, isopyrazam, kresoxim-methyl, mefenoxam, metalaxyl, metconazole, myclobutanil, orysastrobin, penflufen, penthiopyrad, picoxystrobin, propiconazole, prothioconazole, pyraclostrobin, sedaxane, silthiofam, tebuconazole, thiabendazole, thifluzamide, thiophanate, tolclofos-methyl, trifloxystrobin and triticonazole, and combinations thereof.

For additional examples of fungicides that may be included in the seed treatment active compositions in some embodiments *see, e.g.,* Bradley, Managing Diseases, ILLINOIS AGRONOMY HANDBOOK (2008), the content and disclosure of which are incorporated herein by reference. Fungicides useful for compositions in some embodiments may exhibit activity against one or more fungal plant pathogens, including but not limited to Phytophthora, Rhizoctonia, Fusarium, Pythium, Phomopsis, Selerotinia or Phakopsora, and combinations thereof. Non-limiting examples of commercial fungicides which may be suitable for the compositions in some embodiments include PROTÉGÉ, RIVAL or ALLEGIANCE FL or LS (Gustafson, Plano, Texas), WARDEN RTA (Agrilance, St. Paul, Minnesota), APRON XL, APRON MAXX RTA or RFC, MAXIM 4FS or XL (Syngenta, Wilmington, Delaware), CAPTAN (Arvesta, Guelph, Ontario) and PROTREAT (Nitragin Argentina, Buenos Ares, Argentina). Active ingredients in these and other commercial fungicides include, but are not limited to, fludioxonil, mefenoxam, azoxystrobin and metalaxyl. Commercial fungicides may be used in accordance with a manufacturer's recommended amounts or concentrations.

In some embodiments the seed treatment active comprises a biopesticidal agent, including biologicals, biochemicals and biologically-derived compounds, which is toxic to at least one fungus, bacteria, or both. For example, compositions of in some embodiments may comprise one or more of *Ampelomyces quisqualis* AQ 10^{®} (Intrachem Bio GmbH & Co. KG, Germany), *Aspergillus flavus* AFLA-GUARD^{®} (Syngenta Crop Protection, Inc., CH), *Aureobasidium pullulans* BOTECTOR^{®} (bio-ferm GmbH, Germany), *Bacillus pumilus* AQ717 (NRRL B-21662), *Bacillus pumilus* NRRL B-30087, *Bacillus* AQ175 (ATCC 55608), *Bacillus* AQ177 (ATCC 55609), *Bacillus subtilis* AQ713 (NRRL B-21661), *Bacillus subtilis* AQ743 (NRRL B-21665), *Bacillus amyloliquefaciens* FZB24, *Bacillus amyloliquefaciens* FZB42, *Bacillus amyloliquefaciens* NRRL B-50349, *Bacillus subtilis* ATCC 55078, *Bacillus subtilis* ATCC 55079, *Bacillus thuringiensis* AQ52 (NRRL B-21619), *Candida oleophila* I-182 (e.g., ASPIRE^{®} from Ecogen Inc., USA), *Candida saitoana* BIOCURE^{®} (in mixture with lysozyme; BASF, USA) and BIOCOAT^{®} (ArystaLife Science, Ltd., Cary, NC), *Clonostachys rosea* f. *catenulata* (also referred to as *Gliocladium catenulatum)* J1446 (PRESTOP^{®}, Verdera, Finland), *Coniothyrium minitans* CONTANS^{®} (Prophyta, Germany), *Cryphonectria parasitica* (CNICM, France), *Cryptococcus albidus* YIELD PLUS^{®} (Anchor Bio-Technologies, South Africa), *Fusarium oxysporum* BIOFOX^{®} (from S.I.A.P.A., Italy) and FUSACLEAN^{®} (Natural Plant Protection, France), *Metschnikowia fructicola* SHEMER^{®} (Agrogreen, Israel), *Microdochium dimerum* ANTIBOT^{®} (Agrauxine, France), *Muscodor albus* NRRL 30547, *Muscodor roseus* NRRL 30548, *Phlebiopsis gigantea* ROTSOP^{®} (Verdera, Finland), *Pseudozyma flocculosa* SPORODEX^{®} (Plant Products Co. Ltd., Canada), *Pythium oligandrum* DV74 (POLYVERSUM^{®}, Remeslo SSRO, Biopreparaty, Czech Rep.), *Reynoutria sachlinensis* (e.g., REGALIA^{®} from Marrone BioInnovations, USA), *Streptomyces* NRRL B-30145, *Streptomyces* M1064, *Streptomyces galbus* NRRL 30232, *Streptomyces lydicus* WYEC 108 (ATCC 55445), *Streptomyces violaceusniger* YCED 9 (ATCC 55660; DE-THATCH-9^{®}, DECOMP-9^{®} and THATCH CONTROL^{®}, Idaho Research Foundation, USA), *Streptomyces* WYE 53 (ATCC 55750; DE-THATCH-9^{®},DECOMP-9^{®} and THATCH CONTROL^{®}, Idaho Research Foundation, USA), *Talaromyces flavus* V117b (PROTUS^{®}, Prophyta, Germany), *Trichoderma asperellum* SKT-1 (ECO-HOPE^{®}, Kumiai Chemical Industry Co., Ltd., Japan), *Trichoderma atroviride* LC52 (SENTINEL^{®}, Agrimm Technologies Ltd, NZ), *Trichoderma harzianum* T-22 (PLANTSHIELD^{®}, BioWorks Inc., USA), *Trichoderma harzianum* TH-35 (ROOT PRO^{®}, from Mycontrol Ltd., Israel), *Trichoderma harzianum* T-39 (TRICHODEX^{®}, Mycontrol Ltd., Israel; TRICHODERMA 2000^{®}, Makhteshim Ltd., Israel), *Trichoderma harzianum* ICC012 and *Trichoderma viride* TRICHOPEL (Agrimm Technologies Ltd, NZ), *Trichoderma harzianum* ICC012 and *Trichoderma viride* ICC080 (REMEDIER^{®} WP, Isagro Ricerca, Italy), *Trichoderma polysporum* and *Trichoderma harzianum* (BINAB^{®}, BINAB Bio-Innovation AB, Sweden), *Trichoderma stromaticum* TRICOVAB^{®} (C.E.P.L.A.C., Brazil), *Trichoderma virens* GL-21 (SOILGARD^{®}, Certis LLC, USA), and combinations thereof.

### Herbicides

In addition, the seed treatment active comprises one or more suitable chemical herbicides. The herbicides may be a pre-emergent herbicide, a post-emergent herbicide, or a combination thereof. Non-limiting examples of chemical herbicides may comprise one or more acetyl CoA carboxylase (ACCase) inhibitors, acetolactate synthase (ALS) inhibitors, acetanilides, acetohydroxy acid synthase (AHAS) inhibitors, photosystem II inhibitors, photosystem I inhibitors, protoporphyrinogen oxidase (PPO or Protox) inhibitors, carotenoid biosynthesis inhibitors, enolpyruvylshikimate-3-phosphate (EPSP) synthase inhibitors, glutamine synthetase inhibitors, dihydropteroate synthetase inhibitors, mitosis inhibitors, 4-hydroxyphenyl-pyruvate-dioxygenase (4-HPPD) inhibitors, synthetic auxins, auxin herbicide salts, auxin transport inhibitors, nucleic acid inhibitors and/or one or more salts, esters, racemic mixtures and/or resolved isomers thereof. Non-limiting examples of chemical herbicides that can be useful in compositions of the present disclosure include 2,4-dichlorophenoxyacetic acid (2,4-D), 2,4,5-trichlorophenoxyacetic acid (2,4,5-T), ametryn, amicarbazone, aminocyclopyrachlor, acetochlor, acifluorfen, alachlor, atrazine, azafenidin, bentazon, benzofenap, bifenox, bromacil, bromoxynil, butachlor, butafenacil, butroxydim, carfentrazoneethyl, chlorimuron, chlorotoluro, clethodim, clodinafop, clomazone, cyanazine, cycloxydim, cyhalofop, desmedipham, desmetryn, dicamba, diclofop, dimefuron, diuron, dithiopyr, fenoxaprop, fluazifop, fluazifop-P, fluometuron, flufenpyr-ethyl, flumiclorac, flumicloracpentyl, flumioxazin, fluoroglycofen, fluthiacet- methyl, fomesafen, glyphosate, glufosinate, halosulfuron, haloxyfop, hexazinone, imazamox, imazaquin, imazethapyr, ioxynil, isoproturon, isoxaflutole, lactofen, linuron, mecoprop, mecoprop-P, mesotrion, metamitron, metazochlor, methibenzuron, metolachlor (and S-metolachlor), metoxuron, metribuzin, monolinuron, oxadiargyl, oxadiazon, oxyfluorfen, phenmedipham, pretilachlor, profoxydim, prometon, prometrn, propachlor, propanil, propaquizafop, propisochlor, pyraflufen-ethyl, pyrazon, pyrazolynate, pyrazoxyfen, pyridate, quizalofop, quizalofop-P (e.g., quizalofop-ethyl, quizalofop-P-ethyl, clodinafop-propargyl, cyhalofop-butyl, diclofop- methyl, fenoxaprop-P-ethyl, fluazifop-P-butyl, haloxyfop-methyl, haloxyfop-R-methyl), saflufenacil, sethoxydim, siduron, simazine, simetryn, sulcotrione, sulfentrazone, tebuthiuron, tembotrione, tepraloxydim, terbacil, terbumeton, terbuthylazine, thaxtomin (e.g., the thaxtomins described in US Patent No.: 7,989,393), thenylchlor, tralkoxydim, triclopyr, trietazine, trifloxysulfuron, tropramezone, salts and esters thereof; racemic mixtures and resolved isomers thereof and combinations thereof. In an embodiment, seed treatment active compositions comprise acetochlor, clethodim, dicamba, flumioxazin, fomesafen, glyphosate, glufosinate, mesotrione, quizalofop, saflufenacil, sulcotrione, S-3100 and/or 2,4-D, and combinations thereof.

Additional examples of herbicides that may be included in compositions in some embodiments may be found in Hager, *Weed Management,* Illinois Agronomy Handbook (2008); and Loux *et al.,* Weed Control Guide for Ohio, Indiana and Illinois (2015), the contents and disclosures of which are incorporated herein by reference. Commercial herbicides may be used in accordance with a manufacturer's recommended amounts or concentrations.

In some embodiments, the seed treatment active comprises one or more suitable biopesticidal microorganisms which is toxic to at least one plant, including for example, weeds. Examples of biopesticides that may be included or used in compositions in some embodiments may be found in BURGES, *supra;* HALL & MENN, BIOPESTICIDES: USE AND DELIVERY (Humana Press) (1998); McCoy et al., Entomogenous fungi, in CRC HANDBOOK OF NATURAL PESTICIDES. MICROBIAL PESTICIDES, PART A. ENTOMOGENOUS PROTOZOA AND FUNGI (C. M. Inoffo, ed.), Vol. 5:151-236 (1988); SAMSON et al., ATLAS OF ENTOMOPATHOGENIC FUNGI (Springer-Verlag, Berlin) (1988); and deFaria and Wraight, Mycoinsecticides and Mycoacaricides: A comprehensive list with worldwide coverage and international classification of formulation types, BIOL. CONTROL (2007), the contents and disclosures of which are incorporated herein by reference.

### Agriculturally Beneficial Agents

In some embodiments, the seed treatment active comprises one or more agriculturally beneficial agents, such as biologically-derived compounds, biostimulants, microbial inoculant, nutrients, plant signal molecules, or biologically active agents.

In some embodiments, the seed treatment active comprises one or more suitable beneficial biostimulants and/or microbial inoculants. Biostimulants or inoculants may enhance ion uptake, nutrient uptake, nutrient availability or delivery, or a combination thereof. Non-limiting examples of biostimulants or inoculants that may be included or used in compositions may include bacterial extracts (e.g., extracts of one or more diazotrophs, phosphate-solubilizing microorganisms and/or biopesticides), fungal extracts, humic acids (e.g., potassium humate), fulvic acids, myo-inositol, and/or glycine, and any combinations thereof. According to some embodiments, the biostimulants or inoculants may comprise one or more *Azospirillum* (e.g., an extract of media comprising *A. brasilense* INTA Az-39), one or more *Bradyrhizobium* (e.g., an extract of media comprising *B. elkanii* SEMIA 501, *B. elkanii* SEMIA 587, *B. elkanii* SEMIA 5019, *B. japonicum* NRRL B-50586 (also deposited as NRRL B-59565), *B. japonicum* NRRL B-50587 (also deposited as NRRL B-59566), *Bacillus amyloliquefaciens* TJ1000 (also known as 1BE, isolate ATCC BAA-390), *B. japonicum* NRRL B-50588 (also deposited as NRRL B-59567), *B. japonicum* NRRL B-50589 (also deposited as NRRL B-59568), *B. japonicum* NRRL B-50590 (also deposited as NRRL B-59569), *B. japonicum* NRRL B-50591 (also deposited as NRRL B-59570), *Trichoderma virens* G1-3 (ATCC 57678), *Trichoderma virens* G1-21 (Thermo Trilogy Corporation, Wasco, CA), *Trichoderma virens* G1-3 and *Bacillus amyloliquefaciens* FZB24, *Trichoderma virens* G1-3 and *Bacillus amyloliquefaciens* NRRL B-50349, *Trichoderma virens* G1-3 and *Bacillus amyloliquefaciens* TJ1000, *Trichoderma virens* G1-21 and *Bacillus amyloliquefaciens* FZB24, *Trichoderma virens* G1-21 and *Bacillus amyloliquefaciens* NRRL B-50349, *Trichoderma virens* G1-21 and *Bacillus amyloliquefaciens* TJ1000, *Trichoderma viride* TRIECO^{®} (Ecosense Labs. (India) Pvt. Ltd., India, BIO-CURE^{®} F from T. Stanes & Co. Ltd., India), *Trichoderma viride* TV1 (Agribiotec srl, Italy), *Trichoderma viride* ICC080, and/or *Ulocladium oudemansii* HRU3 (BOTRY-ZEN^{®}, Botry-Zen Ltd, NZ), , *B. japonicum* NRRL B-50592 (also deposited as NRRL B-59571), *B. japonicum* NRRL B-50593 (also deposited as NRRL B-59572), *B. japonicum* NRRL B-50594 (also deposited as NRRL B-50493), *B. japonicum* NRRL B-50608, *B. japonicum* NRRL B-50609, *B. japonicum* NRRL B-50610, *B. japonicum* NRRL B-50611, *B. japonicum* NRRL B-50612, *B. japonicum* NRRL B-50726, *B. japonicum* NRRL B-50727, *B. japonicum* NRRL B-50728, *B. japonicum* NRRL B-50729, *B. japonicum* NRRL B-50730, *B. japonicum* SEMIA 566, *B. japonicum* SEMIA 5079, *B. japonicum* SEMIA 5080, *B. japonicum* USDA 6, *B. japonicum* USDA 110, *B. japonicum* USDA 122, *B. japonicum* USDA 123, *B. japonicum* USDA 127, *B. japonicum* USDA 129 and/or *B. japonicum* USDA 532C), one or more *Rhizobium* extracts (e.g., an extract of media comprising *R. leguminosarum* SO12A-2), one or more *Sinorhizobium* extracts (e.g., an extract of media comprising *S. fredii* CCBAU114 and/or *S. fredii* USDA 205), one or more *Penicillium* extracts (e.g., an extract of media comprising *P. bilaiae* ATCC 18309, *P. bilaiae* ATCC 20851, *P. bilaiae* ATCC 22348, *P. bilaiae* NRRL 50162, *P. bilaiae* NRRL 50169, *P. bilaiae* NRRL 50776, *P. bilaiae* NRRL 50777, *P. bilaiae* NRRL 50778, *P. bilaiae* NRRL 50777, *P. bilaiae* NRRL 50778, *P. bilaiae* NRRL 50779, *P. bilaiae* NRRL 50780, P. *bilaiae* NRRL 50781, *P. bilaiae* NRRL 50782, *P. bilaiae* NRRL 50783, *P. bilaiae* NRRL 50784, *P. bilaiae* NRRL 50785, *P. bilaiae* NRRL 50786, *P. bilaiae* NRRL 50787, *P. bilaiae* NRRL 50788, *P. bilaiae* RS7B-SD1, *P. brevicompactum* AgRF18, *P. canescens* ATCC 10419, *P. expansum* ATCC 24692, *P. expansum* YT02, *P. fellatanum* ATCC 48694, *P. gaestrivorus* NRRL 50170, *P. glabrum* DAOM 239074, *P. glabrum* CBS 229.28, *P. janthinellum* ATCC 10455, *P. lanosocoeruleum* ATCC 48919, *P. radicum* ATCC 201836, *P. radicum* FRR 4717, P. *radicum* FRR 4719, *P. radicum* N93/47267 and/or *P. raistrickii* ATCC 10490), one or more *Pseudomonas* extracts (e.g., an extract of media comprising *P. jessenii* PS06), one or more acaricidal, insecticidal and/or nematicidal extracts (e.g., an extract of media comprising *Bacillus firmus* 1-1582, *Bacillus mycoides* AQ726, NRRL B-21664; *Beauveria bassiana* ATCC-74040, *Beauveria bassiana* ATCC-74250, *Burkholderia* sp. A396 sp. nov. rinojensis, NRRL B-50319, *Chromobacterium subtsugae* NRRL B-30655, *Chromobacterium vaccinii* NRRL B-50880, *Flavobacterium* H492, NRRL B-50584, *Metarhizium anisopliae* F52 (also known as *Metarhizium anisopliae* strain 52, *Metarhizium anisopliae* strain 7, *Metarhizium anisopliae* strain 43 and *Metarhizium anisopliae* BIO-1020, TAE-001; deposited as DSM 3884, DSM 3885, ATCC 90448, SD 170 and ARSEF 7711) and/or *Paecilomyces fumosoroseus* FE991), and/or one or more fungicidal extracts (e.g., an extract of media comprising *Ampelomyces quisqualis* AQ 10^{®} (Intrachem Bio GmbH & Co. KG, Germany), *Aspergillus flavus* AFLA-GUARD^{®} (Syngenta Crop Protection, Inc., CH), *Aureobasidium pullulans* BOTECTOR^{®} (bio-ferm GmbH, Germany), *Bacillus pumilus*AQ717 (NRRL B-21662), *Bacillus pumilus* NRRL B-30087, *Bacillus* AQ175 (ATCC 55608), *Bacillus* AQ177 (ATCC 55609), *Bacillus subtilis* AQ713 (NRRL B-21661), *Bacillus subtilis* AQ743 (NRRL B-21665), *Bacillus amyloliquefaciens* FZB24, *Bacillus amyloliquefaciens* NRRL B-50349, *Bacillus amyloliquefaciens* TJ1000 (also known as 1BE, isolate ATCC BAA-390), *Bacillus thuringiensis* AQ52 (NRRL B-21619), *Candida oleophila* I-82 (e.g., ASPIRE^{®} from Ecogen Inc., USA), *Candida saitoana* BIOCURE^{®} (in mixture with lysozyme; BASF, USA) and BIOCOAT^{®} (ArystaLife Science, Ltd., Cary, NC), *Clonostachys rosea* f. *catenulata* (also referred to as *Gliocladium catenulatum)* J1446 (PRESTOP^{®}, Verdera, Finland), *Coniothyrium minitans* CONTANS^{®} (Prophyta, Germany), *Cryphonectria parasitica* (CNICM, France), *Cryptococcus albidus* YIELD PLUS^{®} (Anchor Bio-Technologies, South Africa), *Fusarium oxysporum* BIOFOX^{®} (from S.I.A.P.A., Italy) and FUSACLEAN^{®} (Natural Plant Protection, France), *Metschnikowia fructicola* SHEMER^{®} (Agrogreen, Israel), *Microdochium dimerum* ANTIBOT^{®} (Agrauxine, France), *Muscodor albus* NRRL 30547, *Muscodor roseus* NRRL 30548, *Phlebiopsis gigantea* ROTSOP^{®} (Verdera, Finland), *Pseudozyma flocculosa* SPORODEX^{®} (Plant Products Co. Ltd., Canada), *Pythium oligandrum* DV74 (POLYVERSUM^{®}, Remeslo SSRO, Biopreparaty, Czech Rep.), *Reynoutria sachlinensis* (e.g., REGALIA^{®} from Marrone BioInnovations, USA), *Streptomyces* NRRL B-30145, *Streptomyces* M1064, *Streptomyces galbus* NRRL 30232, *Streptomyces lydicus* WYEC 108 (ATCC 55445), *Streptomyces violaceusniger* YCED 9 (ATCC 55660; DE-THATCH-9^{®},DECOMP-9^{®} and THATCH CONTROL^{®}, Idaho Research Foundation, USA), *Streptomyces* WYE 53 (ATCC 55750; DE-THATCH-9^{®}, DECOMP-9^{®} and THATCH CONTROL^{®}, Idaho Research Foundation, USA), *Talaromyces flavus* V117b (PROTUS^{®}, Prophyta, Germany), *Trichoderma asperellum* SKT-1 (ECO-HOPE^{®}, Kumiai Chemical Industry Co., Ltd., Japan), *Trichoderma atroviride* LC52 (SENTINEL^{®}, Agrimm Technologies Ltd, NZ), *Trichoderma harzianum* T-22 (PLANTSHIELD^{®}, BioWorks Inc., USA), *Trichoderma harzianum* TH-35 (ROOT PRO^{®}, from Mycontrol Ltd., Israel), *Trichoderma harzianum* T-39 (TRICHODEX^{®}, Mycontrol Ltd., Israel; TRICHODERMA 2000^{®}, Makhteshim Ltd., Israel), *Trichoderma harzianum* ICC012 and *Trichoderma viride* TRICHOPEL (Agrimm Technologies Ltd, NZ), *Trichoderma harzianum* ICC012 and *Trichoderma viride* ICC080 (REMEDIER^{®} WP, Isagro Ricerca, Italy), *Trichoderma polysporum* and *Trichoderma harzianum* (BINAB^{®}, BINAB Bio-Innovation AB, Sweden), *Trichoderma stromaticum* TRICOVAB^{®} (C.E.P.L.A.C., Brazil), *Trichoderma virens* GL-21 (SOILGARD^{®}, Certis LLC, USA), *Trichoderma virens* G1-3, ATCC 57678, *Trichoderma virens* G1-21 (Thermo Trilogy Corporation, Wasco, CA), *Trichoderma virens* G1-3 and *Bacillus amyloliquefaciens* FZB2, *Trichoderma virens* G1-3 and *Bacillus amyloliquefaciens* NRRL B-50349, *Trichoderma virens* G1-3 and *Bacillus amyloliquefaciens* TJ1000, *Trichoderma virens* G1-21 and *Bacillus amyloliquefaciens* FZB24, *Trichoderma virens* G1-21 and *Bacillus amyloliquefaciens* NRRL B-50349, *Trichoderma virens* G1-21 and *Bacillus amyloliquefaciens* TJ1000, *Trichoderma viride* TRIECO^{®} (Ecosense Labs. (India) Pvt. Ltd., BIO-CURE^{®} F from T. Stanes & Co. Ltd., India), *Trichoderma viride* TV1 (Agribiotec srl, Italy), *Trichoderma viride* ICC080, and/or *Ulocladium oudemansii* HRU3 (BOTRY-ZEN^{®}, Botry-Zen Ltd, NZ)), and combinations thereof.

In certain embodiments, the seed treatment active comprises a beneficial microbe which may comprise a bacterium of the genus *Actinomycetes, Agrobacterium, Arthrobacter, Alcaligenes, Acinetobacter* spp, *Azospirillum* spp, *Aureobacterium, Azobacter, Azorhizobium, Bacillus, Beijerinckia, Bradyrhizobium, Brevibacillus, Burkholderia, Chromobacterium, Chryseomonas* spp., *Clostridium, Clavibacter, Comamonas, Corynebacterium, Curtobacterium, Enterobacter, Eupenicillium* spp., *Exiguobacterium* spp., *Flavobacterium, Gluconobacter, Hydrogenophaga, Hymenoscyphous, Klebsiella, Kluyvera* spp., *Methylobacterium, Paenibacillus, Pasteuria, Photorhabdus, Phyllobacterium, Pseudomonas, Rhizobium, Rhizoctonia, Rhizopogon, Serratia, Sinorhizobium, Sphingobacterium, Swaminathania* spp., *Stenotrophomonas, Streptomyces* spp., *Thiobacillus, Variovorax, Vibrio, Xanthobacter, Xanthomonas* and *Xenorhabdus,* or any combination thereof. According to some embodiments, a microbe may include one or more of *Bacillus amyloliquefaciens, Bacillus cereus, Bacillus firmus, Bacillus, lichenformis, Bacillus pumilus, Bacillus sphaericus, Bacillus subtilis, Bacillus thuringiensis, Chromobacterium subtsugae, Pasteuria penetrans, Pasteuria usage,* and *Pseudomona fluorescens.* According to some embodiments, a microbe may comprise a fungus of the genus *Alternaria, Ampelomyces, Arthrobotrys* spp., *Aspergillus, Aureobasidium, Beauveria, Candida* spp., *Colletotrichum, Coniothyrium, Gigaspora* spp., *Gliocladium, Glomus* spp., *Laccaria* spp., *Metarhizium, Mucor* spp., *Muscodor, Oidiodendron* spp., *Paecilomyces, Penicillium* spp., *Pisolithus* spp., *Scleroderma, Trichoderma, Typhula, Ulocladium,* and *Verticillium.* In another aspect, a fungus is *Beauveria bassiana, Coniothyrium minitans, Gliocladium virens, Muscodor albus, Paecilomyces lilacinus,* or *Trichoderma polysporum.*

In some embodiments, the seed treatment active comprises one or more suitable biologically active ingredients. Non-limiting examples of biologically active ingredients include plant growth regulators, plant signal molecules, biologically-dervied compounds, growth enhancers, microbial stimulating molecules, biomolecules, soil amendments, nutrients, plant nutrient enhancers, etc., such as lipo-chitooligosaccharides (LCO), chitooligosaccharides (CO), chitinous compounds, flavonoids, jasmonic acid or derivatives thereof (e.g., jasmonates), cytokinins, auxins, gibberellins, absiscic acid, ethylene, brassinosteroids, salicylates, macro- and micronutrients, linoleic acid or derivatives thereof, linolenic acid or derivatives thereof, karrikins, etc.) and combinations thereof.

Seed treatment actives in some embodiments may comprise one or more lipo-chitooligosaccharides (LCOs), chitooligosaccharides (COs), and/or chitinous compounds. LCOs, sometimes referred to as symbiotic nodulation (Nod) signals (or Nod factors) or as Myc factors, consist of an oligosaccharide backbone of β-1,4-linked *N*-acetyl-D-glucosamine ("GlcNAc") residues with an N-linked fatty acyl chain condensed at the non-reducing end. As understood in the art, LCOs differ in the number of GlcNAc residues in the backbone, in the length and degree of saturation of the fatty acyl chain and in the substitutions of reducing and non-reducing sugar residues. *See, e.g.,* Denarie et al., Ann. Rev. Biochem. 65:503 (1996); Diaz et al., Mol. Plant-Microbe Interactions 13:268 (2000); Hungria et al., Soil Biol. Biochem. 29:819 (1997); Hamel et al., Planta 232:787 (2010); and Prome et al., Pure & Appl. Chem. 70(1):55 (1998), the contents and disclosures of which are incorporated herein by reference.

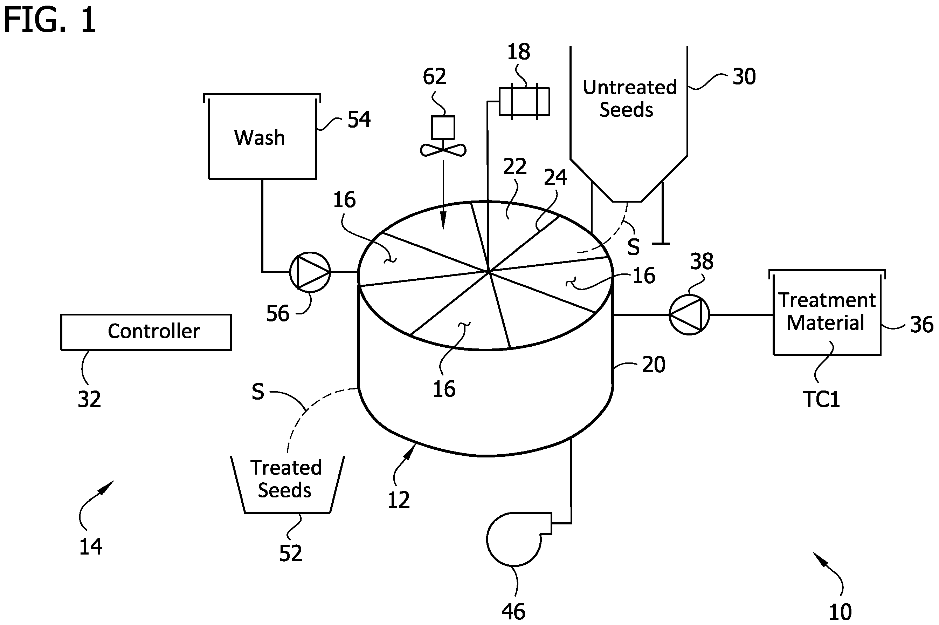

LCOs may be synthetic or obtained from any suitable source. *See, e.g.,* WO 2005/063784, WO 2007/117500 and WO 2008/071674, the contents and disclosures of which are incorporated herein by reference. In some aspects, a synthetic LCO may have the basic structure of a naturally occurring LCO but contains one or more modifications or substitutions, such as those described in Spaink, Crit. Rev. Plant Sci. 54:257 (2000). LCOs and precursors for the construction of LCOs (e.g., COs, which may themselves be useful as a biologically active ingredient) can be synthesized by genetically engineered organisms. *See, e.g.,* Samain et al., Carbohydrate Res. 302:35 (1997); Cottaz et al., Meth. Eng. 7(4):311 (2005); and Samain et al., J. Biotechnol. 72:33 (1999) (e.g., Fig. 1 therein, which shows structures of COs that can be made recombinantly in *E. coli* harboring different combinations of genes *nodBCHL),* the contents and disclosures of which are incorporated herein by reference.

LCOs (and derivatives thereof) may be included or utilized in compositions in various forms of purity and can be used alone or in the form of a culture of LCO-producing bacteria or fungi. For example, OPTIMIZE^{®} (commercially available from Monsanto Company (St. Louis, MO)) contains a culture of *Bradyrhizobium japonicum* that produces LCO. Methods to provide substantially pure LCOs include removing the microbial cells from a mixture of LCOs and the microbe, or continuing to isolate and purify the LCO molecules through LCO solvent phase separation followed by HPLC chromatography as described, for example, in U.S. Patent No. 5,549,718. Purification can be enhanced by repeated HPLC and the purified LCO molecules can be freeze-dried for long-term storage. According to some embodiments, the LCO(s) included in compositions of the present disclosure is/are at least 0.1%, 0.5%, 1%, 2%, 3%, 4%, 5%, 10%, 15%, 20%, 25%, 30%, 35%, 40%, 45%, 50%, 55%, 60%, 65%, 70%, 75%, 80%, 85%, 90%, 91%, 92%, 93%, 94%, 95%, 96%, 97%, 98%, 99% or 100% pure. Compositions and methods in some embodiments may comprise analogues, derivatives, hydrates, isomers, salts and/or solvates of LCOs. LCOs may be incorporated into compositions of the present disclosure in any suitable amount(s)/concentration(s). For example, compositions of the present disclosure comprise about 1 × 10⁻²⁰ M to about 1 × 10⁻¹ M LCO(s). For example, compositions of the present disclosure can comprise about 1 × 10⁻²⁰ M, 1 × 10⁻¹⁹ M, 1 × 10⁻¹⁸ M, 1 × 10⁻¹⁷ M, 1 × 10⁻¹⁶ M, 1 × 10⁻¹⁵ M, 1 × 10⁻¹⁴ M, 1 × 10⁻¹³ M, 1 × 10⁻¹² M, 1 × 10⁻¹¹ M, 1 × 10⁻¹⁰ M, 1 × 10⁻⁹ M, 1 × 10⁻⁸ M, 1 × 10⁻⁷ M, 1 × 10⁻⁶ M, 1 × 10⁻⁵ M, 1 × 10⁻⁴ M, 1 × 10⁻³ M, 1 × 10⁻² M, 1 × 10⁻¹ M of one or more LCOs. In an aspect, the LCO concentration is 1 × 10⁻¹⁴ M to 1 × 10⁻⁵ M, 1 × 10⁻¹² M to 1 × 10⁻⁶ M, or 1 × 10⁻¹⁰ M to 1 × 10⁻⁷ M. In an aspect, the LCO concentration is 1 × 10⁻¹⁴ M to 1 × 10⁻⁵ M, 1 × 10⁻¹² M to 1 × 10⁻⁶ M, or 1 × 10⁻¹⁰ M to 1 × 10⁻⁷ M. The amount/concentration of LCO may be an amount effective to impart a positive trait or benefit to a plant, such as to enhance the disease resistance, growth and/or yield of the plant to which the composition is applied. According to some embodiments, the LCO amount/concentration is not effective to enhance the yield of the plant without beneficial contributions from one or more other constituents of the composition, such as CO and/or one or more pesticides.

In some embodiments the seed treatment active may comprise any suitable COs, perhaps in combination with one or more LCOs. COs differ from LCOs in that they lack the pendant fatty acid chain that is characteristic of LCOs. COs, sometimes referred to as N-acetylchitooligosaccharides, are also composed of GlcNAc residues but have side chain decorations that make them different from chitin molecules [(C₈H₁₃NO₅)ₙ, CAS No. 1398-61-4] and chitosan molecules [(C₅H₁₁NO₄)ₙ, CAS No. 9012-76-4]. *See, e.g.,* D'Haeze et al., Glycobiol. 12(6):79R (2002); Demont-Caulet et al., Plant Physiol. 120(1):83 (1999); Hanel et al., Planta 232:787 (2010); Muller et al., Plant Physiol. 124:733 (2000); Robina et al., Tetrahedron 58:521-530 (2002); Rouge et al., Docking of Chitin Oligomers and Nod Factors on Lectin Domains of the LysM-RLK Receptors in the Medicago-Rhizobium Symbiosis, in The Molecular Immunology of Complex Carbohydrates-3 (Springer Science, 2011); Van der Holst et al., Curr. Opin. Struc. Biol. 11:608 (2001); and Wan et al., Plant Cell 21:1053 (2009), the contents and disclosures of which are incorporated by reference. COs may be obtained from any suitable source. For example, the CO may be derived from an LCO. For example, in an aspect, compositions comprise one or more COs derived from an LCO obtained (i.e., isolated and/or purified) from a strain of *Azorhizobium, Bradyrhizobium* (e.g., *B. japonicum), Mesorhizobium, Rhizobium* (e.g., *R. leguminosarum), Sinorhizobium* (e.g., *S. meliloti),* or mycorhizzal fungi (e.g., *Glomus intraradicus).* Alternatively, the CO may be synthetic. Methods for the preparation of recombinant COs are known in the art. *See, e.g.,* Cottaz et al., Meth. Eng. 7(4):311 (2005); Samain et al., Carbohydrate Res. 302:35 (1997); and Samain et al., J. Biotechnol. 72:33 (1999), the contents and disclosures of which are incorporated herein by reference.

COs (and derivatives thereof) may be included or utilized in compositions in various forms of purity and can be used alone or in the form of a culture of CO-producing bacteria or fungi. According to some embodiments, the CO(s) included in compositions may be at least 0.1%, 0.5%, 1%, 2%, 3%, 4%, 5%, 6%, 7%, 8%, 9%, 10%, 15%, 20%, 30%, 40%, 50%, 60%, 70%, 75%, 80%, 85%, 90%, 91%, 92%, 93%, 94%, 95%, 96%, 97%, 98%, 99%, 99.5% or more pure. It is to be understood that compositions and methods of the present disclosure can comprise hydrates, isomers, salts and/or solvates of COs. COs in some embodiments may be incorporated into compositions in any suitable amount(s)/concentration(s). For example, compositions in some embodiments may comprise about 1 × 10⁻²⁰ M to about 1 × 10⁻¹ M COs, such as about 1 × 10⁻²⁰ M, 1 × 10⁻¹⁹ M, 1 × 10⁻¹⁸ M, 1 × 10⁻¹⁷ M, 1 × 10⁻¹⁶ M, 1 × 10⁻¹⁵ M, 1 × 10⁻¹⁴ M, 1 × 10⁻¹³ M, 1 × 10⁻¹² M, 1 × 10⁻¹¹ M, 1 × 10⁻¹⁰ M, 1 × 10⁻⁹ M, 1 × 10⁻⁸ M, 1 × 10⁻⁷ M, 1 × 10⁻⁶ M, 1 × 10⁻⁵ M, 1 × 10⁻⁴ M, 1 × 10⁻³ M, 1 × 10⁻² M, or 1 × 10⁻¹ M of one or more COs. For example, the CO concentration may be 1 × 10⁻¹⁴ M to 1 × 10⁻⁵ M, 1 × 10⁻¹² M to 1 × 10⁻⁶ M, or 1 x 10⁻¹⁰ M to 1 × 10⁻⁷ M. The amount/concentration of CO may be an amount effective to impart or confer a positive trait or benefit to a plant, such as to enhance the soil microbial environment, nutrient uptake, or increase the growth and/or yield of the plant to which the composition is applied. Compositions in some embodiments may comprise one or more suitable chitinous compounds, such as, for example, chitin (IUPAC: N-[5-[[3-acetylamino-4,5-dihydroxy-6-(hydroxymethyl)oxan-2yl]methoxymethyl]-2-[[5-acetylamino-4,6-dihydroxy-2-(hydroxymethyl)oxan-3-yI]methoxymethyl]-4-hydroxy-6-(hydroxymethyl)oxan-3-ys]ethanamide), chitosan (IUPAC: 5-amino-6-[5-amino-6-[5-amino-4,6-dihydroxy-2(hydroxymethyl)oxan-3-yl]oxy-4-hydroxy-2-(hydroxymethyl)oxan-3-yl]oxy-2(hydroxymethyl)oxane-3,4-diol), and isomers, salts and solvates thereof.

Chitins and chitosans, which are major components of the cell walls of fungi and the exoskeletons of insects and crustaceans, are composed of GlcNAc residues. Chitins and chitosans may be obtained commercially or prepared from insects, crustacean shells, or fungal cell walls. Methods for the preparation of chitin and chitosan are known in the art. *See, e.g.,* U.S. Patent Nos. 4,536,207 (preparation from crustacean shells) and 5,965,545 (preparation from crab shells and hydrolysis of commercial chitosan); and Pochanavanich et al., Lett. Appl. Microbiol. 35:17 (2002) (preparation from fungal cell walls).

Deacetylated chitins and chitosans may be obtained that range from less than 35% to greater than 90% deacetylation and cover a broad spectrum of molecular weights, e.g., low molecular weight chitosan oligomers of less than 15kD and chitin oligomers of 0.5 to 2kD; "practical grade" chitosan with a molecular weight of about 15kD; and high molecular weight chitosan of up to 70kD. Chitin and chitosan compositions formulated for seed treatment are commercially available. Commercial products include, for example, ELEXA^{®} (Plant Defense Boosters, Inc.) and BEYOND^{™} (Agrihouse, Inc.).

In some embodiments the seed treatment active may comprise one or more suitable flavonoids, including, but not limited to, anthocyanidins, anthoxanthins, chalcones, coumarins, flavanones, flavanonols, flavans and isoflavonoids, as well as analogues, derivatives, hydrates, isomers, polymers, salts and solvates thereof. Flavonoids are phenolic compounds having the general structure of two aromatic rings connected by a three-carbon bridge. Classes of flavonoids are known in the art. *See, e.g.,* Jain et al., J. Plant Biochem. & Biotechnol. 11:1 (2002); and Shaw et al., Environ. Microbiol. 11:1867 (2006), the contents and disclosures of which are incorporated herein by reference. Several flavonoid compounds are commercially available. Flavonoid compounds may be isolated from plants or seeds, e.g., as described in U.S. Patents 5,702,752; 5,990,291; and 6,146,668. Flavonoid compounds may also be produced by genetically engineered organisms, such as yeast, *See, e.g.* Ralston et al., Plant Physiol. 137:1375 (2005).

In addition the seed treatment active may comprise one or more suitable one or more flavanones, such as one or more of butin, eriodictyol, hesperetin, hesperidin, homoeriodictyol, isosakuranetin, naringenin, naringin, pinocembrin, poncirin, sakuranetin, sakuranin, and/or sterubin, one or more flavanonols, such as dihydrokaempferol and/or taxifolin, one or more flavans, such as one or more flavan-3-ols (e.g., catechin (C), catechin 3-gallate (Cg), epicatechins (EC), epigallocatechin (EGC) epicatechin 3-gallate (ECg), epigallcatechin 3-gallate (EGCg), epiafzelechin, fisetinidol, gallocatechin (GC), gallcatechin 3-gallate (GCg), guibourtinidol, mesquitol, robinetinidol, theaflavin-3-gallate, theaflavin-3'-gallate, theflavin-3,3'-digallate, thearubigin), flavan-4-ols (e.g., apiforol and/or luteoforol) and/or flavan-3,4-diols (e.g., leucocyanidin, leucodelphinidin, leucofisetinidin, leucomalvidin, luecopelargonidin, leucopeonidin, leucorobinetinidin, melacacidin and/or teracacidin) and/or dimers, trimers, oligomers and/or polymers thereof (e.g., one or more proanthocyanidins), one or more isoflavonoids, such as one or more isoflavones or flavonoid derivatives (e.g, biochanin A, daidzein, formononetin, genistein and/or glycitein), isoflavanes (e.g., equol, ionchocarpane and/or laxifloorane), isoflavandiols, isoflavenes (e.g., glabrene, haginin D and/or 2-methoxyjudaicin), coumestans (e.g., coumestrol, plicadin and/or wedelolactone), pterocarpans, roetonoids, neoflavonoids (e.g, calophyllolide, coutareagenin, dalbergichromene, dalbergin, nivetin), and/or pterocarpans (e.g., bitucarpin A, bitucarpin B, erybraedin A, erybraedin B, erythrabyssin II, erthyrabissin-1, erycristagallin, glycinol, glyceollidins, glyceollins, glycyrrhizol, maackiain, medicarpin, morisianine, orientanol, phaseolin, pisatin, striatine, trifolirhizin), and combinations thereof. Flavonoids and their derivatives may be included in compositions in any suitable form, including, but not limited to, polymorphic and crystalline forms. Flavonoids may be included in compositions in any suitable amount(s) or concentration(s). The amount/concentration of a flavonoid(s) may be an amount configured to produce an effect, such as enhancing plant nutrition and/or yield, for example through activity on soil microorganisms or other means. According to some embodiments, a flavonoid amount/concentration may not be effective to enhance the nutrition or yield of the plant without the beneficial contributions from one or more other ingredients of the composition, such as LCO, CO, and/or one or more pesticides.

In addition in some embodiments the seed treatment active may comprise one or more suitable non-flavonoid nod-gene inducer(s), including, but not limited to, jasmonic acid ([1R-[1α,2β(Z)]]-3-oxo-2-(pentenyl)cyclopentaneacetic acid; JA), linoleic acid ((Z,Z)-9,12-Octadecadienoic acid) and/or linolenic acid ((Z,Z,Z)-9,12,15-octadecatrienoic acid), and analogues, derivatives, hydrates, isomers, polymers, salts and solvates thereof. Jasmonic acid and its methyl ester, methyl jasmonate (MeJA), collectively known as jasmonates, are octadecanoid-based compounds that occur naturally in some plants (e.g., wheat), fungi (e.g., *Botryodiplodia theobromae, Gibbrella fujikuroi),* yeast (e.g., *Saccharomyces cerevisiae)* and bacteria (e.g., *Escherichia coli).* Linoleic acid and linolenic acid may be produced in the course of the biosynthesis of jasmonic acid.

Derivatives of jasmonic acid, linoleic acid, and linolenic acid that may be included or used in compositions in some embodiments include esters, amides, glycosides and salts thereof. Representative esters are compounds in which the carboxyl group of linoleic acid, linolenic acid, or jasmonic acid has been replaced with a --COR group, where R is an --OR¹ group, in which R¹ is: an alkyl group, such as a C₁-C₈ unbranched or branched alkyl group, e.g., a methyl, ethyl or propyl group; an alkenyl group, such as a C₂-C₈ unbranched or branched alkenyl group; an alkynyl group, such as a C₂-C₈ unbranched or branched alkynyl group; an aryl group having, for example, 6 to 10 carbon atoms; or a heteroaryl group having, for example, 4 to 9 carbon atoms, wherein the heteroatoms in the heteroaryl group can be, for example, N, O, P, or S. Representative amides are compounds in which the carboxyl group of linoleic acid, linolenic acid, or jasmonic acid has been replaced with a --COR group, where R is an NR²R³ group, in which R² and R³ are each independently: a hydrogen; an alkyl group, such as a C₁-C₈ unbranched or branched alkyl group, e.g., a methyl, ethyl or propyl group; an alkenyl group, such as a C₂-C₈ unbranched or branched alkenyl group; an alkynyl group, such as a C₂-C₈ unbranched or branched alkynyl group; an aryl group having, for example, 6 to 10 carbon atoms; or a heteroaryl group having, for example, 4 to 9 carbon atoms, wherein the heteroatoms in the heteroaryl group can be, for example, N, O, P, or S. Esters may be prepared by known methods, such as acid-catalyzed nucleophilic addition, wherein the carboxylic acid is reacted with an alcohol in the presence of a catalytic amount of a mineral acid. Amides may also be prepared by known methods, such as by reacting the carboxylic acid with the appropriate amine in the presence of a coupling agent, such as dicyclohexyl carbodiimide (DCC), under neutral conditions. Suitable salts of linoleic acid, linolenic acid and jasmonic acid include, for example, base addition salts. The bases that may be used as reagents to prepare metabolically acceptable base salts of these compounds include those derived from cations such as alkali metal cations (e.g., potassium and sodium) and alkaline earth metal cations (e.g., calcium and magnesium). These salts may be readily prepared by mixing a solution of linoleic acid, linolenic acid, or jasmonic acid with a solution of the base. The salts may be precipitated from solution and collected by filtration, or may be recovered by other means such as by evaporation of the solvent.

Non-flavonoid nod-gene inducers may be incorporated into compositions in any suitable amount(s)/concentration(s). For example, the amount/concentration of non-flavonoid nod-gene inducers may be an amount effective to impart or confer a positive trait or benefit to a plant, such as to enhance the disease resistance, growth and/or yield of the plant to which the composition is applied. According to some embodiments, the amount/concentration of non-flavonoid nod-gene inducers may not be effective to enhance the growth and/or yield of the plant without beneficial contributions from one or more other ingredients of the composition, such as a LCO, CO and/or one or more pesticides.

In some embodiments the seed treatment active compositions may comprise one or more karrikins, including but not limited to 2H-furo[2,3-c]pyran-2-ones, as well as analogues, derivatives, hydrates, isomers, polymers, salts and solvates thereof. Examples of biologically acceptable salts of karrikins include acid addition salts formed with biologically acceptable acids, examples of which include hydrochloride, hydrobromide, sulphate or bisulphate, phosphate or hydrogen phosphate, acetate, benzoate, succinate, fumarate, maleate, lactate, citrate, tartrate, gluconate; methanesulphonate, benzenesulphonate and p-toluenesulphonic acid. Additional biologically acceptable metal salts may include alkali metal salts, with bases, examples of which include the sodium and potassium salts. Karrikins may be incorporated into compositions in any suitable amount(s) or concentration(s). For example, the amount/concentration of a karrikin may be an amount or concentration effective to impart or confer a positive trait or benefit to a plant, such as to enhance the disease resistance, growth and/or yield of the plant to which the composition is applied. In an aspect, a karrakin amount/concentration may not be effective to enhance the disease resistance, growth and/or yield of the plant without beneficial contributions from one or more other ingredients of the composition, such as a LCO, CO and/or one or more pesticides.

In some embodiments the seed treatment active compositions may comprise one or more anthocyanidins and/or anthoxanthins, such as one or more of cyanidin, delphinidin, malvidin, pelargonidin, peonidin, petunidin, flavones (e.g., apigenin, baicalein, chrysin, 7,8-dihydroxyflavone, diosmin, flavoxate, 6-hydroxyflavone, luteolin, scutellarein, tangeritin and/or wogonin) and/or flavonols (e.g., amurensin, astragalin, azaleatin, azalein, fisetin, furanoflavonols galangin, gossypetin, 3-hydroxyflavone, hyperoside, icariin, isoquercetin, kaempferide, kaempferitrin, kaempferol, isorhamnetin, morin, myricetin, myricitrin, natsudaidain, pachypodol, pyranoflavonols quercetin, quericitin, rhamnazin, rhamnetin, robinin, rutin, spiraeoside, troxerutin and/or zanthorhamnin), and combinations thereof.

In some embodiments the seed treatment active compositions may comprise one or more gluconolactone and/or an analogue, derivative, hydrate, isomer, polymer, salt and/or solvate thereof. Gluconolactone may be incorporated into compositions in any suitable amount(s)/concentration(s). For example, the amount/concentration of a gluconolactone may be an amount effective to impart or confer a positive trait or benefit to a plant, such as to enhance the disease resistance, growth and/or yield of the plant to which the composition is applied. In an aspect, the gluconolactone amount/concentration may not be effective to enhance the disease resistance, growth and/or yield of the plant without beneficial contributions from one or more other ingredients of the composition, such as a LCO, CO and/or one or more pesticides.

In some embodiments the seed treatment active compositions may comprise one or more suitable nutrient(s) and/or fertilizer(s), such as organic acids (e.g., acetic acid, citric acid, lactic acid, malic acid, taurine, etc.), macrominerals (e.g., phosphorous, calcium, magnesium, potassium, sodium, iron, etc.), trace minerals (e.g., boron, cobalt, chloride, chromium, copper, fluoride, iodine, iron, manganese, molybdenum, selenium, zinc, etc.), vitamins, (e.g., vitamin A, vitamin B complex (i.e., vitamin B₁, vitamin B₂, vitamin B₃, vitamin B₅, vitamin B₆, vitamin B₇, vitamin B₈, vitamin B₉, vitamin B₁₂, choline) vitamin C, vitamin D, vitamin E, vitamin K.), and/or carotenoids (a-carotene, β-carotene, cryptoxanthin, lutein, lycopene, zeaxanthin, etc.), and combinations thereof. In an aspect, compositions of the present disclosure may comprise macro- and micronutrients of plants or microbes, including phosphorous, boron, chlorine, copper, iron, manganese, molybdenum and/or zinc. According to some embodiments, compositions may comprise one or more beneficial micronutrients. Non-limiting examples of micronutrients for use in compositions described herein may include vitamins, (e.g., vitamin A, vitamin B complex (i.e., vitamin B1, vitamin B2, vitamin B3, vitamin B5, vitamin B6, vitamin B7, vitamin B8, vitamin B9, vitamin B12, choline) vitamin C, vitamin D, vitamin E, vitamin K, carotenoids (a-carotene, β-carotene, cryptoxanthin, lutein, lycopene, zeaxanthin, etc.), macrominerals (e.g., phosphorous, calcium, magnesium, potassium, sodium, iron, etc.), trace minerals (e.g., boron, cobalt, chloride, chromium, copper, fluoride, iodine, iron, manganese, molybdenum, selenium, zinc, etc.), organic acids (e.g., acetic acid, citric acid, lactic acid, malic aclid, taurine, etc.), and combinations thereof. In a particular aspect, compositions may comprise phosphorous, boron, chlorine, copper, iron, manganese, molybdenum, and/or zinc, and combinations thereof. For compositions comprising phosphorous, it is envisioned that any suitable source of phosphorous may be used. For example, phosphorus may be derived from a rock phosphate source, such as monoammonium phosphate, diammonium phosphate, monocalcium phosphate, super phosphate, triple super phosphate, and/or ammonium polyphosphate, an organic phosphorous source, or a phosphorous source capable of solubilization by one or more microorganisms (e.g., *Penicillium bilaiae).*

### ii. Seed-FinishingAgent

In the processes described herein, the seed treatment component may comprise a seed-finishing agent. In one or more examples, the seed-finishing agent may provide increased lubricity to the exterior surface of the seeds to aid in handling. In one or more examples, the seed-finishing agent may inhibit or reduce stickiness of the exterior surfaces of the seeds. In one or more examples, the seed-finishing agent may promote drying of the exterior surfaces of the seeds. In one or more examples, the seed-finishing agent may increase lubricity of the exterior surfaces of the seeds. In one or more examples, the seed-finishing agent may enhance uniformity of the exterior surfaces of the seeds. In one or more examples, the seed-finishing agent may reduce liquid load of the seed treater. It is understood that the seed treatment component may include a single type of seed-finishing agent that provides one or more enhanced properties to the seeds. Alternatively or in addition, the seed treatment component may comprise more than one type of seed-finishing agent that provides one or more enhanced properties to the seeds.

In some embodiments, the seed-finishing agent may comprise one or more minerals, including but not limited to talc, graphite, mica, and combinations thereof. Talc, graphite, and mica-whether alone or in combination with one another and/or other suitable agents- may be suitable for enhancing at least one of lubricity and/or flowability of the treated seeds, drying of the treated seeds, size uniformity of the seeds, and seed germination, among others. In some embodiments, the minerals comprise a mixture of talc and mica. For example, the talc to mica ratio may be about 60:40. In some embodiments, the minerals comprise a mixture of talc and graphite.

### iii. Other Seed Treatment Components

Generally, the seed treatment components described herein can also comprise one or more additional components. The additional component can be an additional ingredient, including for example, any adjuvants, excipients, nutrients, micronutrients, or other desirable components useful in seed treatment formulations. For example, in some embodiments, the seed treatment further comprises a surfactant.

Examples of anionic surfactants include alkyl sulfates, alcohol sulfates, alcohol ether sulfates, alpha olefin sulfonates, alkylaryl ether sulfates, arylsulfonates, alkylsulfonates, alkylaryl sulfonates, sulfosuccinates, mono- or diphosphate esters of polyalkoxylated alkyl alcohols or alkyl phenols, mono- or disulfosuccinate esters of alcohols or polyalkoxylated alkanols, alcohol ether carboxylates, phenol ether carboxylates. In one embodiment, the surfactant is an alkylaryl sulfonate.

Non-limiting examples of commercially available anionic surfactants include sodium dodecylsulfate (Na-DS, SDS), MORWET D-425 (a sodium salt of alkyl naphthalene sulfonate condensate, available from Akzo Nobel), MORWET D-500 (a sodium salt of alkyl naphthalene sulfonate condensate with a block copolymer, available from Akzo Nobel), sodium dodecylbenzene sulfonic acid (Na-DBSA) (available from Sigma Aldrich), diphenyloxide disulfonate, naphthalene formaldehyde condensate, DOWFAX (available from Dow), dihexylsulfosuccinate, and dioctylsulfosuccinate, alkyl naphthalene sulfonate condensates, and salts thereof.

Examples of non-ionic surfactants include sorbitan esters, ethoxylated sorbitan esters, alkoxylated alkylphenols, alkoxylated alcohols, block copolymer ethers, and lanolin derivatives. In accordance with one embodiment, the surfactant comprises an alkylether block copolymer.

Non-limiting examples of commercially available non-ionic surfactants include SPAN 20, SPAN 40, SPAN 80, SPAN 65, and SPAN 85 (available from Sigma Aldrich); TWEEN 20, TWEEN 40, TWEEN 60, TWEEN 80, and TWEEN 85 (available from Sigma Aldrich); IGEPAL CA-210, IGEPAL CA-520, IGEPAL CA-720, IGEPAL CO-210, IGEPAL CO-520, IGEPAL CO-630, IGEPAL CO-720, IGEPAL CO-890, and IGEPAL DM-970 (available from Sigma Aldrich); TRITON X-100 (available from Sigma Aldrich); BRIJ S10, BRIJ S20, BRIJ 30, BRIJ 52, BRIJ 56, BRIJ 58, BRIJ 72, BRIJ 76, BRIJ 78, BRIJ 92V, BRIJ 97, and BRIJ 98 (available from Sigma Aldrich); PLURONIC L-31, PLURONIC L-35, PLURONIC L-61, PLURONIC L-81, PLURONIC L-64, PLURONIC L-121, PLURONIC 10R5, PLURONIC 17R4, and PLURONIC 31R1 (available from Sigma Aldrich); Atlas G-5000 and Atlas G-5002L (available from Croda); ATLOX 4912 and ATLOX 4912-SF (available from Croda); SOLUPLUS (available from BASF); LANEXOL AWS (available from Croda); TRITON AG-98 (available from Rohm and Haas Co.); and Silwet L-77 (available from Momentive ).

Non-limiting examples of cationic surfactants include mono-alkyl quaternary amine, fatty acid amide surfactants, amidoamine, imidazoline, and polymeric cationic surfactants.

In some embodiments, the seed treatment active comprises a co-solvent in addition to water. Non-limiting examples of co-solvents that can be used include ethyl lactate, methyl soyate/ethyl lactate co-solvent blends (e.g., STEPOSOL, available from Stepan), isopropanol, acetone, 1,2-propanediol, N-alkylpyrrolidones (e.g., the AGSOLEX series, available from ISP), a petroleum based-oil (e.g., AROMATIC series and SOLVESSO series available from Exxon Mobil), isoparaffinic fluids (e.g. ISOPAR series, available from Exxon Mobil), cycloparaffinic fluids (e.g. NAPPAR 6, available from Exxon Mobil), mineral spirits (e.g. VARSOL series available from Exxon Mobil), and mineral oils (e.g., paraffin oil).

Examples of commercially available organic solvents include pentadecane, ISOPAR M, ISOPAR V, and ISOPAR L (available from Exxon Mobil).

### Seed Treatment System

Referring to FIG. 1, an example of a seed treatment system for applying one or more seed treatment components TC1 to seeds S is generally indicated at reference number 10. The seed treatment system 10 includes a seed treater (or seed treatment device), generally indicated at 12, and a seed processing system, generally indicated at 14. As explained below, the seed treater 12 defines a plurality of rotating seed compartments 16 that are circumferentially spaced apart about a rotational axis TA of the treater. A driver 18 (e.g., a motor, a turbine, etc.) drives 360-degree rotation of the compartments 16 about the rotational axis TA. The seed processing system 14 is configured to perform a process step in one or more of the seed compartments 16 as the seed compartments 16 rotate about the rotational axis TA. Moreover, the process steps are performed sequentially on the same seed compartment 16 as the compartments rotate. During rotation, at least two of the seed compartments 16, and in one example, each of the seed compartments, have process steps being performed in them concurrently. In one example, the type of process step being performed on any one of the seed compartments 16 at an instantaneous time during the rotation of the seed compartments 16 is a function of the angular position of the compartment relative of the axis TA.

In one example, as each compartment 16 rotates one revolution about the axis TA, the seed processing system 14: i) loads seeds S (e.g., untreated seeds) into one of the compartments 16; ii) dispenses at least one seed treatment component TC1 in the compartment; iii) agitates the seeds in the compartment to mix or distribute the seed treatment component on the seeds; iv) dries the seed treatment component on the seeds; v) removes the dried treated seeds from the compartment; and vi) conditions the compartment for receiving additional seeds and repeating the process cycle. In one example, the above process steps are performed at different rotational positions of the seed compartment 16. Moreover, in one example, the process steps are being performed concurrently on different seed compartments at an instantaneous time during the rotation of the compartments.

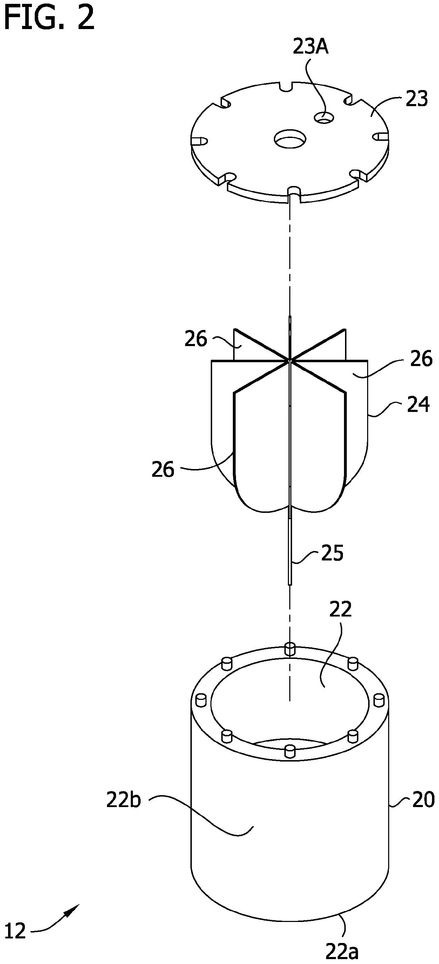

Referring to FIGS. 2, 3, 4, and 5, the seed treater 12 includes a receptacle 20 (e.g., a drum, a barrel, etc.) that defines a processing chamber 22 extending along the axis TA. The receptacle 20 has an end wall 22a extending transverse to the axis TA and a side wall 22b extending circumferentially about and axially along the axis. In the illustrated embodiment, the end wall 22a has a hemispheroid shape and the side wall 22b has a generally cylindrical shape. The walls of the receptacle 20 can have other shapes in other embodiments. In the illustrated embodiment, the axis TA is a vertical axis, but in other embodiments the axis of the seed treater can have other orientations. The end wall 22a of the receptacle 20 defines a bottom end of the processing chamber 22, and the side wall 22b defines a generally vertical side of the chamber. As explained below, the end wall 22a and the side wall 22b of the receptacle 20 includes features in circumferentially spaced apart regions R1-R4 of the seed treater 12 that interface with the seed processing system 14 to perform different seed treatment steps. In the illustrated embodiment, a cap 23 is configured to be mounted on the top end portion of the side wall 22b of the receptacle 20 (i.e., an end portion of the side wall opposite the end wall 22a of the receptacle) over an open end of the receptacle. The cap 23 generally covers the open top end of the receptacle 20 and defines a seed loading opening 23A configured to pass seeds S (e.g., untreated seeds) into the processing chamber 22 as explained in further detail below.

A divider 24 is rotatably received in the processing chamber 22 to define the compartments 16 within the chamber. The divider 24 is mounted on the receptacle 20 for rotation with respect to the receptacle about the axis TA. In the illustrated embodiment, the divider 24 includes a shaft 25 extending along the axis TA and received in a bearing in the end wall 22a of the receptacle 20. The driver 18 is operatively connected to the divider 24 to drive rotation of the divider about the axis TA with respect to the receptacle 20. The divider 24 comprises a plurality of blades 26 that are circumferentially spaced apart about the axis TA. Each of the blades 26 extends radially outward from adjacent the axis TA (e.g., from the shaft 25) to a peripheral edge margin shaped and arranged to generally conform to the interior of the receptacle 20. Thus, the blades 26 form circumferentially spaced dividing walls that define the circumferentially spaced compartments 16 within the processing chamber 22. Because the driver 18 is configured to drive rotation of the divider 24 about the axis TA, the compartments 16 are configured to rotate around the axis. In the illustrated embodiment, the divider 24 defines eight compartments 16. In other embodiments, a divider can define other numbers of compartments.

In the illustrated embodiment, the seed treater 12 comprises one divider 24 received in the receptacle. In one or more embodiments, the seed treater comprises a plurality of dividers in one or more receptacles. For example, a receptacle can be segmented vertically into plurality of discrete seed treatment chambers in a vertical stack. A rotatable divider can be received in each seed treatment chamber, and in one or more embodiments, the dividers can be rotatably coupled to a common shaft. Multiple dividers can also be implemented in a seed treater in other ways in one or more embodiments.

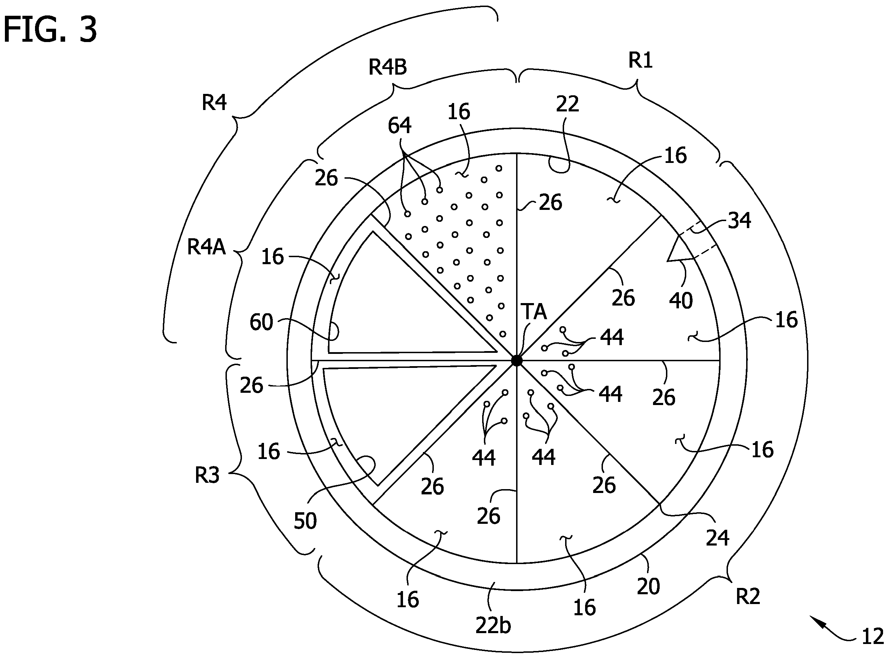

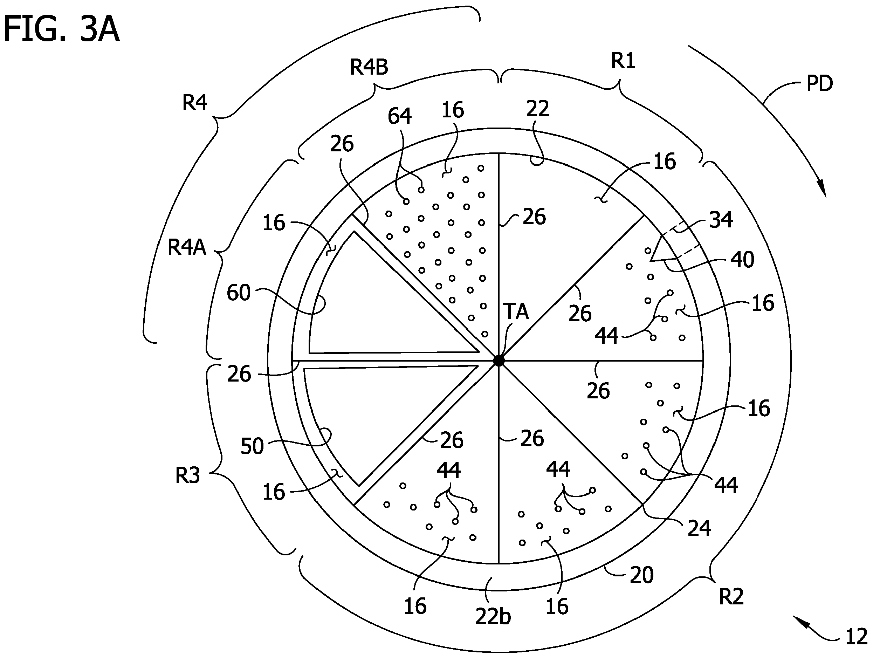

Referring to FIG. 3, the receptacle 20 includes process interfaces (e.g., inlets, outlets, or other openings) arranged for use in the performance of a process step in each compartment as each compartment 16 is rotated about the axis TA of the treater 12 in a processing direction PD (in the illustrated embodiment, the processing direction PD is clockwise as shown in FIG. 3; but in other embodiments, the processing direction could be counterclockwise). One or more of the process interfaces are in communication with the seed processing system 14 for performing the process step. As explained below, the process interfaces are contained within respective circumferential regions R1-R4 of the seed treater 12. It will be understood that the sizes and shapes of the regions can vary to suit different seed treatment processes. As the driver 18 rotates the divider 24 about the axis TA in the processing direction PD, each compartment 16 travels sequentially through the circumferential regions R1-R4 and a sequential seed treatment step is conducted within one or more of the compartments using the process interfaces of the receptacle 20. The illustrated seed treatment system 10 is configured to begin each seed treatment cycle with one of the compartments 16 angularly aligned with a seed loading region R1, at about the one-o'clock position as shown in FIG. 3. As each compartment 16 rotates one revolution in the processing direction PD from the seed loading region R1, the seed treatment system 10 is configured to load, coat, dry, and eject seeds S, for example, as well as recondition the compartment for treating additional seeds in the subsequent revolution about the axis TA, for example. Below, the features of the seed treatment system 10 that relate to each circumferential region R1-R4 of the seed treater 12 and the process steps performed at each region are detailed in sequential order, before describing an exemplary process of treating seeds S using the seed treatment system 10.

Referring to FIGS. 1-3, the seed processing system 14 includes a hopper 30 (broadly, a seed loader) configured to load seeds to be treated S, such as untreated seeds, into the processing chamber 22 of the seed treater 12 at the seed loading region R1. In the illustrated embodiment, the hopper 30 (e.g., a control valve of the hopper, a seed delivery device (e.g., an auger, a pump, etc.) of the hopper, etc.) is operatively connected to a controller 32 of the seed processing system 14 (e.g., at least one controller), which includes a processor and memory, configured (e.g., programmed) to selectively open and close the hopper to deliver seeds S from the hopper into the compartment 16 that is angularly aligned with the seed loading region R1. The seed loading opening 23A of the cap 23 of the seed treater 12 is aligned with the seed loading region R1 so that the hopper 30 can load seeds S into the processing chamber 22 from the top of the receptacle 20 through the seed-loading opening. The end wall 22a and the side wall 22b of the receptacle 20 are each substantially solid (e.g., non-perforated, nonporous, etc.) along the loading region R1 of the treater 12 to contain the seeds. Thus, seeds S accumulate along the height of each compartment 16 as the hopper 30 loads the seeds through the seed-loading opening 23A.

In one embodiment, the controller 32 is configured to control the driver 18. For example, the controller 32 may be configured (e.g., programmed) to operate the driver 18 to rotate the divider 24 in the processing direction PD in a stepwise fashion. For example, the driver 18 may rotate the divider 24 until a compartment 16 is aligned with the seed loading region R1 and then stop driving rotation to allow the hopper 30 to load the untreated seeds S into the compartment. In other embodiments, the controller 32 may be configured (e.g., programmed) to operate the driver 18 to drive continuous rotation of the divider 24 at a rate that allows the seeds S to be loaded into the compartment 16 while the compartment rotates through the seed loading region R1.

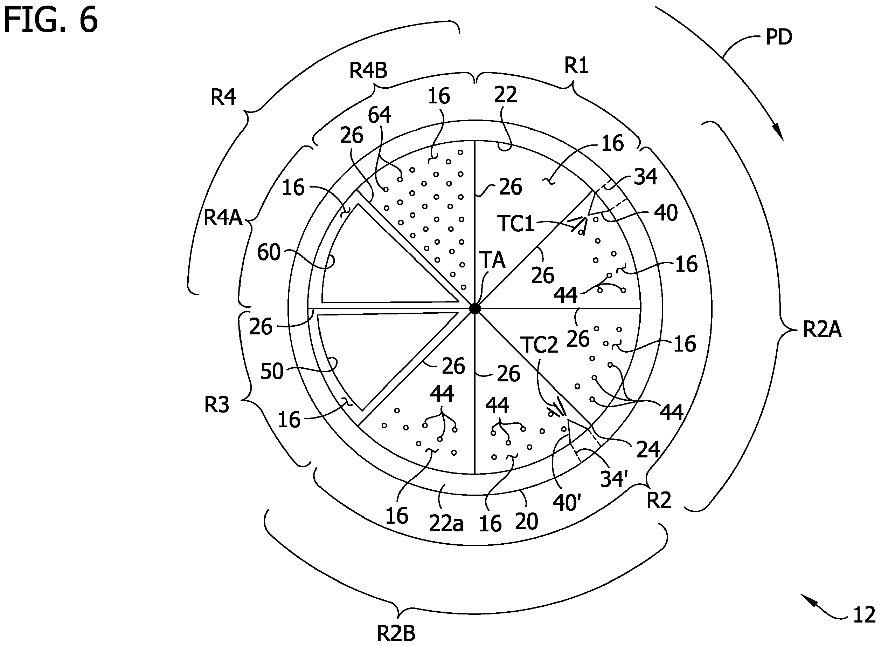

Referring to FIGS. 1, 3, and 4, the seed treatment system 10 is configured to deliver at least one seed treatment component TC1 into each compartment 16 when the compartment is aligned with a seed treatment region R2 of the treater 12. The seed treatment region R2 is located adjacent and downstream of the seed loading region R1 in the processing direction PD. In the illustrated embodiment, the seed treatment region R2 is the largest processing region of the seed treater 12, extending from an upstream end adjacent the seed loading region R1 to downstream end located generally diametrically opposite the upstream end. Other seed treatment regions can extend other circumferential dimensions in other embodiments. The side wall 22b of the receptacle 20 defines one of the process interfaces in the form of a treatment dispensing inlet 34 through which the seed treatment component TC1 is dispensed into the processing chamber 22. In the illustrated embodiment, the treatment dispensing inlet 34 extends radially through the side wall of the receptacle 20 adjacent the upstream end of the seed treatment region R2. It is understood that other embodiments can include more than one treatment dispensing inlet and/or treatment dispensing inlet(s) at different locations of the receptacle, such as discussed below with respect to FIG. 6. It is further understood that, in some embodiments, the seed treatment component may be dispensed into the processing chamber from a location other than through the wall of the receptacle (e.g., through an open end of the receptacle, etc.). It is still further understood that the treatment component could be dispensed into the seed processing chamber at the same region as where the seeds are loaded into the receptacle.

The seed processing system 14 comprises a source of seed treatment 36 and a treatment delivery device 38 configured to deliver the seed treatment component TC1 to the corresponding process interface (e.g., the treatment dispensing inlet 34) and into each compartment 16 when the compartment is angularly aligned with the treatment dispensing inlet (e.g., positioned adjacent the upstream end of the seed treatment region R2). In one embodiment, the treatment delivery device 38 comprises a pump or other mover for delivering a liquid or other fluidized seed treatment. Suitably, the controller 32 is configured (e.g., programmed) to control the pump 38, a valve (not shown), or some other device to selectively deliver the seed treatment component TC1 through the treatment dispensing inlet 34 and into the processing chamber 22. A spray nozzle 40 communicates with the inner end of the treatment dispensing inlet 34. The spray nozzle 40 is configured to spray the treatment component TC1 into the receptacle 20 along a generally horizontally extending spray path spaced apart along the axis TA. In other embodiments, the seed processing system could include a seed treatment dispensing inlet and/or nozzle configured to dispense the seed treatment in other ways. For example, instead of spraying the seed treatment, in one embodiment, the inlet is configured dispense the seed treatment component as a drip or non-atomized flow. In addition, in one or more embodiments, the seed treatment dispensing inlet could be positioned above the receptacle or below the receptacle and/or be configured to dispense the seed treatment component at other angles with respect to the seed processing chamber. A plurality of seed treatment inlets having parallel or transverse orientations may also be used in some embodiments. The treatment delivery device 38 may be configured to deliver any suitable fluid or fluidizable seed treatment component comprising a treatment agent. For example, in one or more embodiments, the treatment delivery device 38 is configured to deliver one or more of a treatment liquid, a treatment slurry, a treatment powder, etc. In another example, the treatment delivery device 38 may be configured to deliver dry seed treatment component into the receptacle, and may not comprise a pump. For example, the treatment delivery device may comprise a screw auger or other device for delivering powder or particulate seed treatment component. Other devices for delivering seed treatment component are possible.

The illustrated seed treatment system 10 is configured to agitate the seeds S in each of the compartments 16 as the compartment is rotated through the seed treatment region R2 to evenly apply the treatment component TC1 to substantially all of the seeds in the compartment. Referring to FIGS. 1, 3, 4, and 5, the seed treater 12 defines additional process interfaces in the form of a plurality of fluidizing jets 44 that are circumferentially spaced apart between the upstream and downstream ends of the seed treatment region R2. As explained below, the fluidizing jets of gas (e.g., air) J are configured to generally fluidize the seeds S in the compartments 16 to both control drying of the treatment component TC1 to ensure proper bonding with the seeds S and also agitate the seeds in each compartment to evenly distribute the seed treatment component. Thus, the seed treatment region R2 can also be referred to as a fluidizing region. In the illustrated embodiment, the jets 44 are spaced apart along an interior section of the end wall 22a of the receptacle 20 adjacent the shaft 25. In another configuration shown in FIGS. 3A, 4A, and 5A, the jets 44 are spaced apart along an outer margin of the end wall 22a of the receptacle 20. Still other arrangements of fluidizing openings can also be used in other embodiments (e.g., the openings could be evenly distributed along the end wall across the full area of the seed treatment region R2; the openings could be randomly positioned along the end wall in the seed treatment region R2, etc.). Referring to FIGS. 3, 4, and 5, each jet 44 is formed by a jet opening in the end wall 22a of the receptacle 20. Other embodiments can include separate jet nozzles or other structure to deliver fluidizing air flow to the seeds.

A gas mover 46 of the seed processing system 14, such as a blower, a compressor, a pressurized source of gas, or another device for delivering gas, is configured to deliver gas (e.g., air) into the jet openings 44 and discharge jets of gas J from the jet openings into the processing chamber 22 to fluidize the seeds S therein. In certain embodiments, the gas mover 46 can operate continuously. In other embodiments, the controller 32 can be configured to selectively activate the gas mover 46 and/or control a valve or other device to control fluidization of the seeds. The gas mover 46 can be adjusted (e.g., by the controller 32) to control drying of the seeds S. In one or more embodiments, the gas mover 46 is configured to fully dry the seeds as the compartment is rotated through the seed treatment region R2. For example, the gas mover 46 can be configured to blow dry air through the jets 44 with sufficient velocity to substantially reduce the moisture content of the treatment component TC1 of the seeds as the compartment is rotated through the seed treatment region R2. In certain embodiments, the gas mover 46 can be configured to partially dry the seeds or to inhibit the seeds from being dried. For example, the gas mover 46 can be configured to deliver gas containing moisture through the jets 44 to fluidize the seeds S. Fully drying, partially drying, and inhibiting from being dried are all ways of controlling drying for purposes of this disclosure.

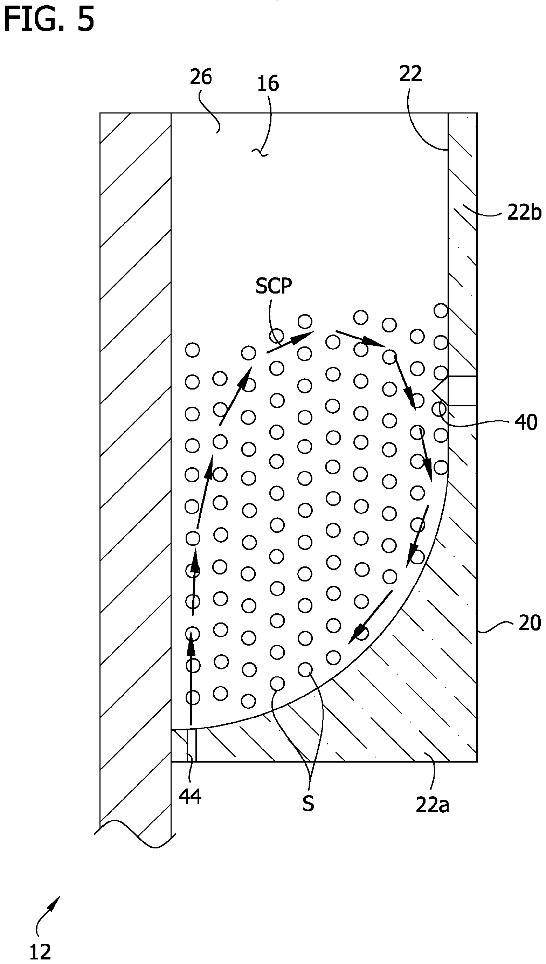

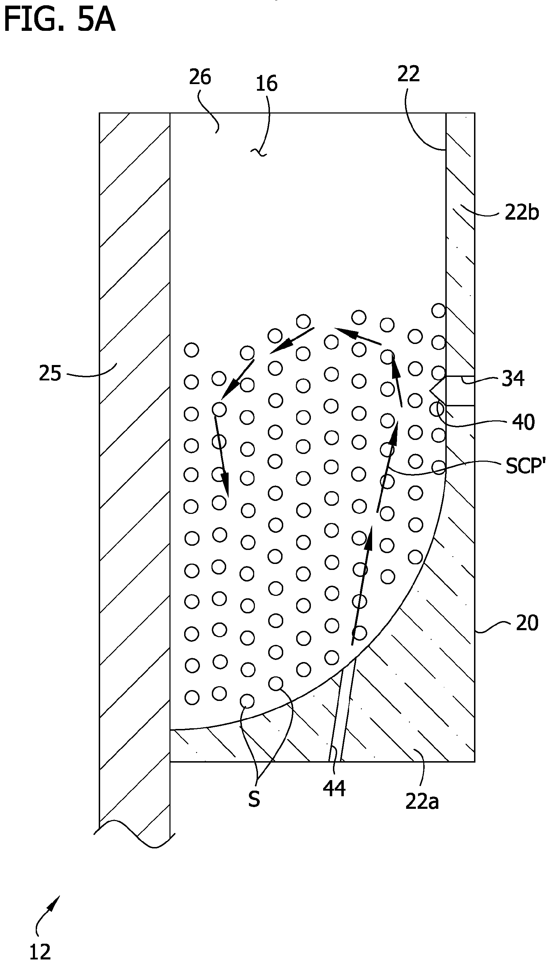

Referring to FIG. 5, in one configuration, the jets 44 are configured to initially direct the jet of gas J in a direction generally parallel to the shaft 25 at a location adjacent the shaft. The jets of gas J direct the seeds S along a seed circulation path SCP that initially extends upward along the shaft 25. The jets J create a low pressure zone at a radially outer end of the processing chamber 22 adjacent the side wall 22b of the receptacle 20. Thus the seed circulation path SCP extends outward after extending upward to direct the seeds S toward the spray path of the seed treatment component TC1. The seed circulation path SCP crosses the spray path of the seed treatment component TC1 and then extends downward along the side wall 22b of the receptacle 20. The curved end wall 22a of the receptacle guides the seeds S inward toward the fluidizing jets 44 to continuously circulate the seeds along the seed circulation path SCP. The jets of gas J continue to circulate the seeds S along the seed circulation path SCP after the driver 18 rotates the respective compartment 16 angularly past the spray nozzle 40 in the processing direction PD. Suitably, the controller 32 and/or the driver 18 is configured to limit the speed at which the divider 24 rotates so that the jets of fluidizing air J can evenly coat the seeds S in each compartment 16 with seed treatment component TC1 and control drying of the seed treatment component in the time it takes the compartment to rotate through the seed treatment region R2.

Referring to FIG. 5A, in another configuration, each of the fluidizing jets 44 is shaped and arranged to direct the jet of gas J through each of the compartments 16 at an outwardly extending angle with respect to the axis TA of the treater 12. As shown in FIG. 5, the jets of gas J direct the seeds S along a seed circulation path SCP' that initially extends upwardly along the side wall 22b of the receptacle 20 to intersect the spray path of the seed treatment component TC1. The jets of gas J create a low pressure zone at a radially inner end of the processing chamber 22 adjacent the end wall 22a of the receptacle 20. Thus, after crossing the spray path, the seed circulation path SCP' circulates the seeds inward toward the shaft 25 of the divider 24 and downward toward the end wall 22a of the receptacle 20. As above, the jets of gas J continue to circulate the seeds S along the seed circulation path SCP' after the driver 18 rotates the respective compartment 16 beyond the spray nozzle 40 in the processing direction PD to evenly coat the seeds S in each compartment 16 with seed treatment component TC1 and control drying of the seed treatment component while the compartment rotates through the seed treatment region R2.

In still other embodiments, the fluidizing ports can be arranged to convey seeds along other seed circulation paths. For example, in one embodiment, the fluidization ports are arranged to continuously circulate the seeds in random directions to evenly coat and control drying of the seeds while the compartment 22 rotates through the seed treatment region R2.

Referring to FIGS. 1 and 3, the seed treatment system 10 is configured to automatically remove the seeds S from each of the compartments 16 after the seeds are treated and dried. The seed treater 12 includes a seed removal region R3 adjacent to the downstream end of the seed treatment region R2. The end wall 22a of the receptacle 20 defines another of the process interfaces in the form of a seed removal opening 50 along the seed removal region R3. The seed removal opening 50 is sized and arranged for passing treated seeds S through the end wall 22a of the receptacle 20 and into a seed collector 52 positioned below the seed treater 12. Thus, when each of the compartments 16 is angularly aligned with the seed removal region R3, the treater 12 is configured to remove the seeds S from the compartment by discharging the seeds through the opening 50. In the illustrated embodiment, a single seed removal opening 50 is defined in the end wall 22a of the receptacle 20. Other seed treatment devices can, however, define more than one seed removal opening and/or seed removal openings in the side wall of the receptacle. In the illustrated embodiment, the seed collector 52 comprises a seed bin, but other embodiments can include other seed collectors (e.g., seed conveyors, bags, trailers, etc.). Because the seed removal opening 50 is formed in the end wall 22a of the vertically oriented receptacle 20, the seeds S automatically fall through the opening to the seed collector 52 under the influence of gravity. In other embodiments, however, it is contemplated that the seed treatment system 10 could comprise an extraction device (e.g., a vacuum) configured to forcibly draw seeds S through a seed removal opening.

After removing the treated seeds S from each of the compartments 16, the illustrated seed treatment system 10 is configured to condition the walls of the compartment for receiving new seeds (e.g., untreated seeds) before the compartment is again rotated to alignment with the seed loading region R1. The seed treater 12 comprises a compartment conditioning region R4 spaced apart angularly between the seed removal region R3 and the seed loading region R1. Although any suitable conditioning technique may be used, in the illustrated embodiment, the conditioning region R4 includes a compartment washing region R4A, at which each of the compartments 16 is configured to be washed with a liquid washing agent, and a compartment drying region R4B, at which each of the compartments is configured to be dried of residual liquid therein.

A washing device 54 is configured to wash each of the compartments 16 with a washing liquid when the compartment is aligned with the washing region R4A of the processing chamber 22. The washing device 54 comprises a washing dispenser that is configured to dispense washing liquid into the processing chamber 22 at the washing region R4A thereof. For example, the washing device 54 can be configured to dispense washing liquid into the processing chamber 22 through a process interface of the seed treater 12 formed in the side wall 22b, end wall 22a, or open end of the receptacle 20. In certain embodiments, the washing device 54 is configured to dispense the washing liquid into the chamber 22 under pressure to pressure wash the compartments 16. Suitably, the controller 32 is operatively connected to a pump 56 or valve (not shown) of the washing device 54 to selectively deliver washing liquid from the washing device to the processing chamber 22 each time a compartment 16 is rotated into alignment with the washing region R4A of the treater 12. The end wall 22a of the receptacle 20 defines one of the process interfaces in the form of a drain opening 60 (broadly, a compartment conditioning opening) configured to drain washing liquid from each of the compartments 16. It is understood that the drain opening could also be formed in the side wall of the receptacle in other embodiments. In the illustrated embodiment, the end wall of the receptacle 20 defines a single drain opening 60 that has a similar size and shape to that of the seed removal opening 50. Other embodiments can include other drain opening configurations.

A drying device 62 is configured to dry each of the compartments 16 using forced air when the compartment is aligned with the drying region R4B of the processing chamber 22. The drying device 62 comprises a blower or other gas mover that is configured to blow air or other gas into the processing chamber 22 in a direction extending generally along the axis TA. For example, in one embodiment, the drying device 62 is configured to blow air downward through an opening (e.g., one of the process interfaces; not shown) in the cap 23 of the seed treater 12. Suitably, the controller 32 is operatively connected to the blower 62 to selectively blow drying air through each compartment 16 after the compartment is washed and rotated into alignment with the washing region R4B of the treater 12. The end wall 22a of the receptacle 20 defines process interfaces in the form of a plurality of drying openings 64 (each, broadly, a compartment conditioning opening) configured for receiving residual liquid forced through the drying openings by the drying air. The illustrated embodiment includes an array of relatively small drying openings spaced apart along the end wall of the receptacle over the drying region R4B. Other embodiments can include other drying opening configurations.

Referring to FIGS. 1 and 3, a method of using the seed treatment system 10 to execute a seed treatment process will now be briefly described. Although the controller 32 is configured to control many aspects of the treatment process in the illustrated embodiment, it will be understood that in other embodiments aspects of the process can be controlled in other ways (e.g., manually, etc.). As explained above, in one embodiment, the controller 32 directs the driver 18 to rotate the divider 24 about the axis TA in stepwise fashion (e.g., in increments of 1/n of a revolution, where n equals the number of compartments 16 defined by the divider, e.g., eight in the illustrated embodiment). In other embodiments, the driver 18 is configured to continuously rotate the divider 24 so that each compartment 16 is aligned with each of the processing regions R1-R4 for enough time to carry out the respective steps of the process in each region.

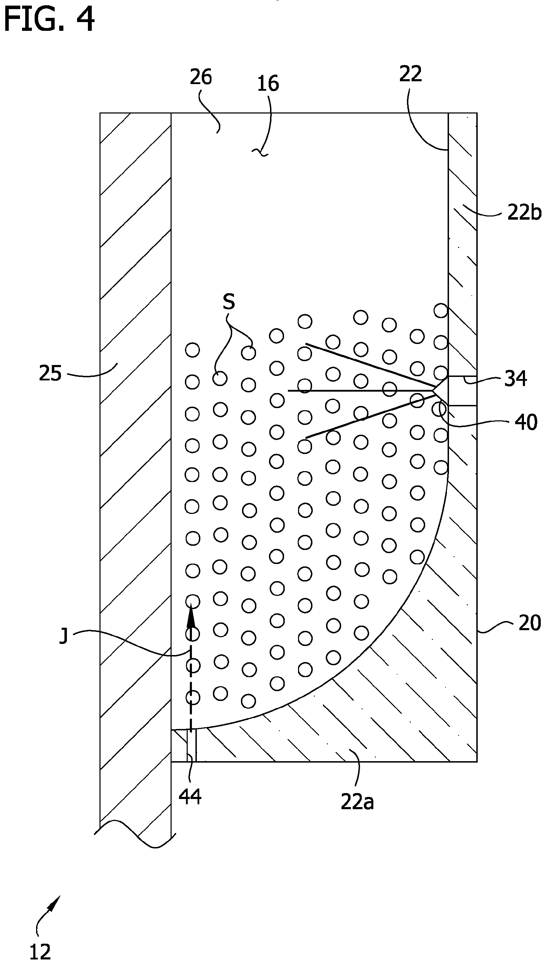

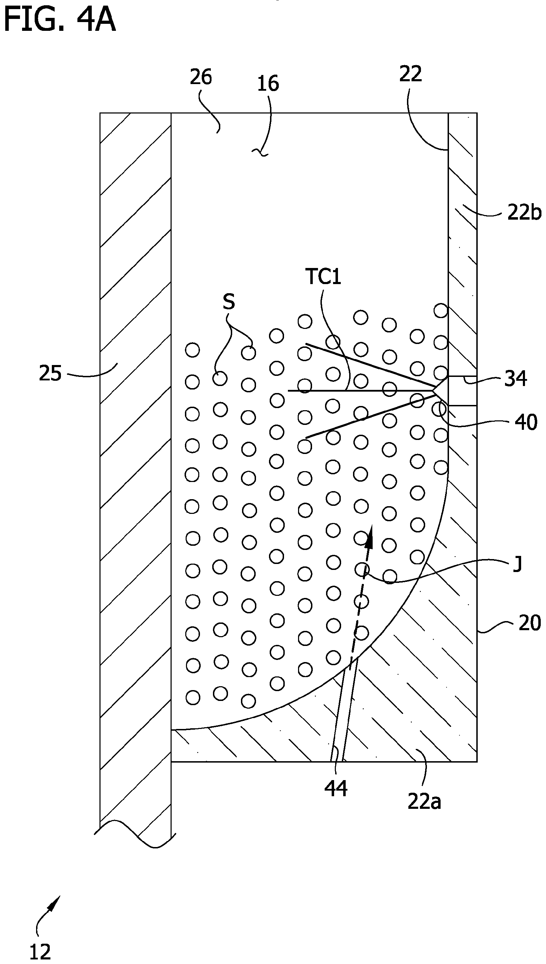

In a first angular position, each of the compartments 16 has been conditioned for accepting untreated seeds S and is rotated to angular alignment with the seed loading region R1. The controller 32 opens the hopper 30 to deliver a predetermined amount of seeds S from the hopper through the seed loading opening 23A in the cap 23 into the compartment 16 while the compartment is either stationed in alignment with the seed loading region R1 (e.g., if the system 10 is configured for stepwise rotation) or is rotated through the seed loading region (e.g., if the system 10 is configured for continuous rotation of the divider 24). After receiving seeds S, each compartment 16 is rotated to a second angular position in which the compartment is angularly aligned with an upstream end portion of the seed treatment region R2. When the compartment 16 is angularly aligned with the treatment dispensing inlet 34, the controller 32 directs the treatment delivery device 36 to deliver a predetermined amount of seed treatment component TC1 into the compartment. Simultaneously, the gas mover 46 directs gas (e.g. air) through the jet openings 44 in the end wall 22a of the receptacle 20 to form jets of gas J (FIG. 4) that circulate the seeds S along the circulation path SCP (FIG. 5) and through the spray of the seed treatment component TC1. The jets of gas J continuously fluidize the seeds S and circulate them along the circulation path SCP as the compartment 16 travels from the upstream end to the downstream end of the seed treatment region R2. The fluidization of the seeds S causes continuous mixing of the seeds and the seed treatment component TC1 to, for example, evenly coat the seeds. In addition, the continuous jet air flow dries the seeds S in the compartment 16 as the compartment travels through the seed treatment region R2.

When each compartment 16 is positioned at a third angular position in which the compartment is angularly aligned with the seed removal region R3 of the treater 12, the seeds S in the compartment fall through the seed removal opening 50 in the end wall 22a of the receptacle 20 and onto the seed collector 52. The seeds S delivered to the seed collector 52 are, in one embodiment, coated with seed treatment, dried, and ready for packaging at the time of delivery. When the driver 18 rotates each compartment 16 to a fourth angular position in which the compartment is angularly aligned with the compartment washing region R4A, the controller 32 directs the washing device 54 to wash the blades 26 of the divider 24 defining the compartment with washing liquid. Much of the washing liquid drains through the drain opening 60 formed in the end wall 22a of the receptacle 20 while the compartment 16 is angularly aligned with the compartment washing region R4A. To further condition each compartment 16 for receiving new seeds S, the controller 32 directs the drying device 62 to blow drying air through the compartment to force residual liquid in the compartment through the drying openings 64 when the compartment is rotated to a fifth angular position that is angularly aligned with the drying region R4B. After each compartment 16 is dried in the drying region R4B, the compartment is suitably conditioned for receiving new untreated seeds S. Thus, after the driver 18 rotates the divider 24 so that a compartment 16 travels a complete revolution about the axis TA, the compartment can again receive untreated seeds S in the initial seed loading region R1 to automatically repeat the process in a revolving manner.

Referring to FIG. 6, in one or more embodiments, the seed treatment system 10 is configured for applying a plurality of layers of different seed treatment components TC1, TC2 to the seeds S. In the illustrated embodiment, the system 10 is configured for applying a first layer of a first seed treatment component TC1 and a second layer of a second seed treatment component TC2, but other embodiments can be configured to coat the seeds with more than two layers and/or more than two seed treatment components. As configured in FIG. 6, the seed treater 12 includes a seed treatment region R2 having a first layer section R2A and a second layer section R2B downstream of the first layer section in the processing direction PD. The first layer section R2A extends from the upstream end of the seed treatment region R2 to a downstream end about midway between the upstream and downstream ends of the seed treatment region. The second layer section R2B extends from an upstream end adjacent the downstream end of the first layer section R2A to a downstream end at the downstream end of the seed treatment region R2. The seed treater 12 has the same configuration as described above with respect to FIGS. 3A, 4A, 5A (it is understood that other configurations, e.g., the configuration of FIGS. 3, 4, and 5, could be used in other embodiments), except that a second treatment dispensing inlet 34' communicating with a second spray nozzle 40' extends radially through the side wall 22b of the receptacle 20 adjacent the upstream end of the second layer section R2B. The second treatment dispensing inlet 34' is operatively connected to a second source of seed treatment component (not shown) of the processing system 14 configured to deliver the second seed treatment component TC2 through the second dispensing inlet 34' and the second spray nozzle 40, to spray the second seed treatment component on seeds S in each compartment 16 when the compartment is angularly aligned with the upstream end portion of the second layer section R2B.

In use, the first treatment delivery device 38 delivers a first seed treatment component TC1 through the dispensing inlet 34 and spray nozzle 40 onto seeds S in each compartment 16 when the compartment is angularly aligned with the upstream end portion of the seed treatment R2 as described above. As the compartment rotates through the first layer section R2A, the jets J of fluidizing air that are angularly aligned with the first layer section agitate the seeds S to evenly distribute the first seed treatment component TC1 and control drying of (e.g., fully dry) the first seed treatment component before the compartment is rotated beyond the downstream end of the first layer section. Thus, in the configuration shown in FIG. 6, the seed treatment system 10 is configured, for example, to coat the seeds S with a first layer of seed treatment component TC1 and to control drying of the first layer of seed treatment component before applying a second seed treatment component. After the seeds S in each compartment 16 are coated with the first seed treatment component TC1 and dried, the driver 18 rotates the divider 24 so that the compartment 16 is angularly aligned with the upstream end portion of the second layer section R2B. The second treatment delivery device (not shown) delivers a second seed treatment component TC2 through the dispensing inlet 34' and the spray nozzle 40' onto the seeds S over the dried first treatment layer as the compartment rotates through the second layer section R2B. The jets J of fluidizing air that are angularly aligned with the second layer section R2B agitate the seeds S to evenly distribute the second seed treatment component TC2 in a second layer over the first layer. The jets J suitably also control drying of the second seed treatment component TC2 before the compartment is rotated into alignment with the seed removal region R3.

As can be seen, the illustrated seed treatment system 10 can execute a continuous seed treatment process. Unlike other continuous processes, the fluidization system simultaneously distributes seed treatment components over the seeds and dries the seed treatment component in a single device so that the treated seeds that are removed from the seed treater are ready for packaging, shipping, or planting. Furthermore, the system can be configured for layering multiple seed treatment components onto the seeds in a single process.

When introducing elements of the embodiment(s), the articles "a", "an", "the" and "said" are intended to mean that there are one or more of the elements. The terms "comprising", "including" and "having" are intended to be inclusive and mean that there may be additional elements other than the listed elements.

As various changes could be made in the above constructions, products, and methods without departing from the scope of the invention, it is intended that all matter contained in the above description and shown in the accompanying drawings shall be interpreted as illustrative and not in a limiting sense.

## Claims

1. A system (10) for treating seeds, the system comprising:
a plurality of compartments (16) each defining an interior sized and shaped to receive seeds to be treated, wherein the compartments (16) are rotatable 360 degrees about a rotational axis and are spaced circumferentially apart from one another about the rotational axis;
a driver (18) configured to rotate the plurality of compartments 360 degrees about the rotational axis; and
a seed processing system (14) configured to perform in each compartment (16) a first processing step when the compartment is at a first angular position relative to the rotational axis and a second processing step different from the first processing step when the compartment (16) is at a second angular position different from the first angular position relative to the rotational axis
wherein the first processing step comprises loading seeds into the compartment, wherein the seed processing system comprises a seed loader configured to load the seeds into each of the compartments (16) when the compartment is in the first angular position.
wherein the second processing step comprises delivering seed treatment to the compartment (16), wherein the seed processing system comprises a treatment delivery device (38) configured to deliver the seed treatment into the compartment.
wherein the second processing step comprises mixing the seed treatment and the seeds in the compartment (16), wherein the seed processing system comprises an agitator configured to agitate the seeds and the seed treatment component in the compartment (16),
**characterized in that** the agitator comprises a fluidizer configured to fluidize the seeds in the compartment (16).

2. A system for treating seeds as set forth in claim 1, wherein the fluidizer comprises at least one fluidizing jet and a gas mover configured to discharge a jet of gas through the fluidizing jet.

3. A system for treating seeds set forth in claim 2, wherein the seed processing system is configured to perform in each compartment (16) a third processing step when the compartment is at a third angular position relative to the rotational axis, wherein the third processing step comprises drying the seeds and the seed treatment in the compartment (16), the seed processing system comprising a gas mover (46) configured to deliver a jet of gas into the compartment.

4. A system for treating seeds set forth in claim 1, wherein each of the first and second processing steps are performed concurrently by the seed processing system.

5. A system as set forth in claim 1, wherein the driver (18) is configured to continuously rotate the plurality of compartments (16) about the rotational axis.

6. A system as set forth in claim 1, wherein the driver (18) is configured to rotate the plurality of compartments (16) about the rotational axis in stepwise fashion.

7. A system as set forth in claim 1, wherein the seed processing system is configured to a batch seed treatment process in each of the compartments (16).

8. A method of treating seeds by using a system according to any of the preceding claims, the method comprising: rotating a divider received in a processing chamber of a receptacle about an axis of the receptacle so that each of the plurality of circumferentially spaced compartments defined by the divider rotates about the axis; and
during each revolution of each of the compartments (16) about the axis:
loading seeds into the compartment (16);
delivering a first seed treatment component into the compartment (16);
fluidizing the seeds in the compartment (16) to mix the seeds and the first treatment component and dry the first treatment component to form a first layer on the seeds;
delivering a second seed treatment component into the compartment (16); and
fluidizing the seeds and the second treatment component to mix the seeds and the second treatment component to form a second layer over the first layer.

9. A method of treating seeds as set forth in claim 8, wherein each of said steps of loading, dispensing, and fluidizing is performed during a single revolution of the compartment (16) about the axis.

## Patentansprüche

1. System (10) zur Behandlung von Samen, wobei das System umfasst:
eine Vielzahl von Fächern (16), die jeweils einen Innenraum definieren, der bemessen und geformt ist, um zu behandelnde Samen anzunehmen, wobei die Fächer (16) um 360 Grad um eine Rotationsachse rotierbar sind und im Umfang um die Rotationsachse herum voneinander beabstandet sind;
einen Mitnehmer (18), der ausgestaltet ist, um die Vielzahl der Fächer um 360 Grad um die Rotationsachse zu rotieren; und
ein Saatgutverarbeitungssystem (14), das ausgestaltet ist, um in jedem Fach (16) einen ersten Verarbeitungsschritt durchzuführen, wenn sich das Fach an einer ersten Winkelposition relativ zu der Rotationsachse befindet, und einen zweiten Verarbeitungsschritt durchzuführen, der von dem ersten Verarbeitungsschritt verschieden ist, wenn sich das Fach (16) an einer zweiten Winkelposition befindet, die relativ zu der Rotationsachse von der ersten Winkelposition verschieden ist,
wobei der erste Verarbeitungsschritt Laden von Samen in das Fach umfasst, wobei das Saatgutverarbeitungssystem einen Saatgutlader umfasst, der ausgestaltet ist, um die Samen in jedes der Fächer (16) zu laden, wenn sich das Fach in der ersten Winkelposition befindet,
wobei der zweite Verarbeitungsschritt das Abgeben von Saatgutbehandlung an das Fach (16) umfasst,
wobei das Saatgutverarbeitungssystem eine Behandlungsabgabevorrichtung (38) umfasst, die ausgestaltet ist, um die Saatgutbehandlung in das Fach abzugeben,
wobei der zweite Verarbeitungsschritt Mischen der Saatgutbehandlung und der Samen in dem Fach (16) umfasst, wobei das Saatgutverarbeitungssystem ein Mischwerk umfasst, das ausgestaltet ist, um die Samen und die Saatgutbehandlungskomponente in dem Fach (16) zu durchmischen,
**dadurch gekennzeichnet, dass** das Mischwerk einen Verwirbler umfasst, der ausgestaltet ist, um die Samen in dem Fach (16) zu verwirbeln.

2. System zur Behandlung von Samen nach Anspruch 1, wobei der Verwirbler mindestens einen Verwirbelungsstrahl und eine Gasbewegungseinrichtung umfasst, die ausgestaltet ist, um einen Gasstrahl durch den Verwirbelungsstrahl auszutragen.

3. System zur Behandlung von Samen nach Anspruch 2, wobei das Saatgutverarbeitungssystem ausgestaltet ist, um in jedem Fach (16) einen dritten Verarbeitungsschritt durchzuführen, wenn das Fach sich an einer dritten Winkelposition relativ zu der Rotationsachse befindet, wobei der dritte Verarbeitungsschritt Trocknen der Samen und der Saatgutbehandlung in dem Fach (16) umfasst, wobei das Saatgutverarbeitungssystem eine Gasbewegungseinrichtung (46) umfasst, die ausgestaltet ist, um einen Gasstrahl in das Fach abzugeben.

4. System zur Behandlung von Samen nach Anspruch 1, wobei jeder von dem ersten und dem zweiten Verarbeitungsschritt gleichzeitig durch das Saatgutverarbeitungssystem durchgeführt wird.

5. System nach Anspruch 1, wobei der Mitnehmer (18) ausgestaltet ist, um kontinuierlich die Vielzahl der Fächer (16) um die Rotationsachse zu rotieren.

6. System nach Anspruch 1, wobei der Mitnehmer (18) ausgestaltet ist, um schrittweise die Vielzahl der Fächer (16) um die Rotationsachse zu rotieren.

7. System nach Anspruch 1, wobei das Saatgutverarbeitungssystem für einen Chargensaatgutbehandlungsprozess in jedem der Fächer (16) ausgestaltet ist.

8. Verfahren zur Behandlung von Samen unter Verwendung eines Systems nach einem der vorhergehenden Ansprüche, wobei das Verfahren umfasst:
Rotieren eines Teilers, der in einer Verarbeitungskammer eines Behälters angenommen wurde, um eine Achse des Behälters, so dass jedes von der Vielzahl der im Umfang beabstandeten Fächer, die durch den Teiler definiert werden, um die Achse rotiert; und
während jeder Umdrehung von jedem der Fächer (16) um die Achse:
Laden von Samen in das Fach (16);
Abgeben einer ersten Saatgutbehandlungskomponente in das Fach (16);
Verwirbeln der Samen in dem Fach (16), um die Samen und die erste Behandlungskomponente zu mischen und die erste Behandlungskomponente zu trocknen, um eine erste Schicht auf den Samen zu bilden;
Abgeben einer zweiten Saatgutbehandlungskomponente in das Fach (16); und
Verwirbeln der Samen und der zweiten Behandlungskomponente, um die Samen und die zweite Behandlungskomponente zu mischen, um eine zweite Schicht über der ersten Schicht zu bilden.

9. Verfahren zum Behandeln von Samen nach Anspruch 8, wobei jeder der Schritte des Ladens, Abgebens und Verwirbelns während einer einzigen Umdrehung des Faches (16) um die Achse durchgeführt wird.

## Revendications

1. Système (10) de traitement de semences, le système comprenant :
une pluralité de compartiments (16) définissant chacun un intérieur dimensionné et formé pour recevoir des semences à traiter, les compartiments (16) pouvant tourner sur 360 degrés autour d'un axe de rotation et étant espacés circonférentiellement les uns des autres autour de l'axe de rotation ;
un dispositif d'entraînement (18) configuré pour faire tourner la pluralité de compartiments de 360 degrés autour de l'axe de rotation ; et
un système de traitement de semences (14) configuré pour réaliser dans chaque compartiment (16) une première étape de traitement lorsque le compartiment est à une première position angulaire par rapport à l'axe de rotation et une seconde étape de traitement différente de la première étape de traitement lorsque le compartiment (16) est à une deuxième position angulaire différente de la première position angulaire par rapport à l'axe de rotation,
la première étape de traitement comprenant le chargement des semences dans le compartiment, le système de traitement de semences comprenant un chargeur de semences configuré pour charger les semences dans chacun des compartiments (16) lorsque le compartiment est dans la première position angulaire,
la deuxième étape de traitement comprenant l'administration d'un traitement de semences dans le compartiment (16), le système de traitement de semences comprenant un dispositif d'administration de traitement (38) configuré pour administrer le traitement de semences dans le compartiment,
la deuxième étape de traitement comprenant le mélange du traitement de semences et des semences dans le compartiment (16), le système de traitement de semences comprenant un agitateur configuré pour agiter les semences et le composant de traitement de semences dans le compartiment (16),
**caractérisé en ce que** l'agitateur comprend un fluidiseur configuré pour fluidiser les semences dans le compartiment (16).

2. Système de traitement de semences selon la revendication 1, le fluidiseur comprenant au moins un jet de fluidisation et un dispositif de déplacement de gaz configuré pour décharger un jet de gaz à travers le jet de fluidisation.

3. Système de traitement de semences selon la revendication 2, le système de traitement de semences étant configuré pour réaliser dans chaque compartiment (16) une troisième étape de traitement lorsque le compartiment est à une troisième position angulaire par rapport à l'axe de rotation, la troisième étape de traitement comprenant le séchage des semences et le traitement des semences dans le compartiment (16), le système de traitement de semences comprenant un dispositif d'entraînement de gaz (46) configuré pour administrer un jet de gaz dans le compartiment.

4. Système de traitement de semences selon la revendication 1, chacune des première et deuxième étapes de traitement étant réalisée simultanément par le système de traitement de semences.

5. Système selon la revendication 1, le dispositif d'entraînement (18) étant configuré pour faire tourner en continu la pluralité de compartiments (16) autour de l'axe de rotation.

6. Système selon la revendication 1, le dispositif d'entraînement (18) étant configuré pour faire tourner la pluralité de compartiments (16) autour de l'axe de rotation de manière progressive.

7. Système selon la revendication 1, le système de traitement de semences étant configuré pour un processus de traitement de semences par lots dans chacun des compartiments (16).

8. Procédé de traitement de semences en utilisant un système selon l'une quelconque des revendications précédentes, le procédé comprenant : la rotation d'un diviseur reçu dans une chambre de traitement d'un réceptacle autour d'un axe du réceptacle de sorte que chacun de la pluralité de compartiments espacés circonférentiellement définis par le diviseur tourne autour de l'axe ; et
pendant chaque révolution de chacun des compartiments (16) autour de l'axe :
le chargement des semences dans le compartiment (16) ;
l'administration d'un premier composant de traitement des semences dans le compartiment (16) ;
la fluidisation des semences dans le compartiment (16) pour mélanger les semences et le premier composant de traitement et sécher le premier composant de traitement pour former une première couche sur les semences ;
l'administration d'un second composant de traitement des semences dans le compartiment (16) ; et
la fluidisation des semences et du second composant de traitement pour mélanger les semences et le second composant de traitement afin de former une seconde couche sur la première couche.

9. Procédé de traitement de semences selon la revendication 8, chacune desdites étapes de chargement, de distribution et de fluidisation étant réalisée au cours d'une seule révolution du compartiment (16) autour de l'axe.
